# EUROPÄISCHE PATENTSCHRIFT

(11) **EP 3 532 710 B1**
(45) Veröffentlichungstag und Bekanntmachung des Hinweises auf die Patenterteilung: **26.08.2020**
(21) Anmeldenummer: 17801354.6
(22) Anmeldetag: 26.10.2017
(51) Int. Cl.: F01K 3/00, F01K 3/06, F01K 25/00

(54) **ENERGIESPEICHERVORRICHTUNG SOWIE VERFAHREN ZUR SPEICHERUNG VON ENERGIE**
ENERGY STORAGE DEVICE AND THERMAL ENERGY STORAGE METHOD
DISPOSITIF DE STOCKAGE D'ÉNERGIE ET PROCÉDÉ DE STOCKAGE D'ÉNERGIE THERMIQUE

(30) Priorität: 26.10.2016 EP 16195878
(43) Veröffentlichungstag der Anmeldung: 04.09.2019
(73) Patentinhaber: Ortmann, Peter, 8200 Schaffhausen (CH); Graf, Werner, 8200 Schaffhausen (CH)
(72) Erfinder: Ortmann, Peter, 8200 Schaffhausen (CH); Graf, Werner, 8200 Schaffhausen (CH)
(74) Vertreter: Dr. Graf & Partner AG
(86) Internationale Anmeldenummer: PCT/EP2017/077533
(87) Internationale Veröffentlichungsnummer: WO 2018/078062

(56) Entgegenhaltungen:
- WO-A1-2016/169928
- WO-A1-2017/081186
- DE-A1-102011 088 380
- DE-A1-102013 217 607

## Beschreibung

Die Erfindung betrifft eine Energiespeichervorrichtung zur Speicherung von Energie. Die Erfindung betrifft zudem ein Verfahren zur Speicherung von Energie.

### Stand der Technik

Erneuerbare Energiequellen wie Windenergie oder Sonnenenergie werden zunehmend zur Energiegewinnung verwendet. Um eine nachhaltige und stabile Energieversorgung basierend auf erneuerbaren Energiequellen zu gewährleisten ist es erforderlich gewonnene Energie zu speichern und zeitversetzt wieder abzugeben. Hierzu sind kostengünstige Energiespeichervorrichtungen erforderlich, welche Überschussenergie zwischenspeichern und zeitverzögert wieder abgeben können.

Das Dokument EP2147193B1 offenbart einerseits eine Vorrichtung sowie ein Verfahren zur Speicherung von thermischer Energie. Das Dokument offenbart zudem eine Vorrichtung zur Speicherung und zur zeitversetzten Abgabe von elektrischer Energie. Dabei wird zum Laden des Energiespeichers elektrische Energie in Wärme umgewandelt und als thermische Energie gespeichert. Beim Entladen wird die thermische Energie wieder in elektrische Energie umgesetzt und danach abgegeben. Diese Vorrichtung, beziehungsweise dieses Verfahren, weisen die Nachteile auf, dass zu deren Betrieb zwei separate Energiespeicher, ein Wärmespeicher sowie ein Kältespeicher, erforderlich sind, die zudem noch mit sehr hoher Temperatur von bis zu 2000 °C beziehungsweise sehr tiefer Temperatur von bis zu - 80°C betrieben werden müssen, was zur Folge hat, dass die Erstellung, der Betrieb sowie der Unterhalt der Vorrichtung, umfassend nebst dem Wärme- beziehungsweise Kältespeicher zudem noch Verdichter, Wärmetauscher usw., sehr aufwendig und teuer ist. Die erforderlichen Verdichter sind zudem relativ gross und deren Leistungsdichte gering.
Das Dokument DE 10 2011 088380 A1 offenbart eine Energiespeichervorrichtung zur Speicherung saisonal anfallender elektrischer Überschussenergie. Die Energiespeicherung erfolgt sehr langfristig. Die Ausspeicherung der gespeicherten Energie erfolgt über einen Dampfkreislauf. Diese Vorrichtung ist bezüglich Wirkungsrad und bezüglich Kosten nachteilig.

### Darstellung der Erfindung

Aufgabe der vorliegenden Erfindung ist es somit, eine wirtschaftlich vorteilhaftere Energiespeichervorrichtung beziehungsweise ein wirtschaftlich vorteilhafteres Verfahren zur Energiespeicherung zu bilden.

Aufgabe der vorliegenden Erfindung ist es zudem insbesondere eine wirtschaftlich vorteilhaftere Vorrichtung beziehungsweise ein wirtschaftlich vorteilhafteres Verfahren zur Speicherung und Wiedergewinnung von elektrischer Energie zu bilden.

Diese Aufgabe wird gelöst mit einer Vorrichtung aufweisend die Merkmale von Anspruch 1. Die abhängigen Ansprüche 2 bis 11 betreffen weitere, vorteilhafte Ausgestaltungen. Die Aufgabe wird weiter gelöst mit einem Verfahren aufweisend die Merkmale von Anspruch 12. Die abhängigen Ansprüche 13 bis 14 betreffen weitere, vorteilhafte Verfahrensschritte.

Die Aufgabe wird insbesondere gelöst mit einer Energiespeichervorrichtung zur Speicherung von Energie, umfassend:
- einen Hochtemperaturregenerator enthaltend ein festes, insbesondere poröses Speichermaterial,
- ein Arbeitsgas als Wärmeträgermedium, um zwischen dem Speichermaterial und dem durchströmenden Arbeitsgas Wärme auszutauschen, und
- einen Ladekreislauf sowie einen Entladekreislauf für das Arbeitsgas,
wobei der Ladekreislauf derart ausgebildet ist, dass ausgehend von einem Vorwärmer zumindest ein erster Wärmetauschkanal eines Rekuperators, ein erster Verdichter, der Hochtemperaturregenerator, ein zweiter Wärmetauschkanal des Rekuperators, und danach ein erster Expander unter Ausbildung eines Kreislaufs Fluid leitend miteinander verbunden sind, und
wobei der erste Verdichter mit dem ersten Expander gekoppelt ist, und wobei der erste Verdichter Teil einer ersten Kolbenmaschine bildet und der erste Expander Teil einer zweiten Kolbenmaschine bildet, wobei die Kolbenmaschinen derart ansteuerbar entweder als Verdichter oder als Expander betreibbar sind, dass der erste Verdichter des Ladekreislaufs im Entladekreislauf einen zweite Expander bildet, und dass der erste Expander des Ladekreislaufs im Entladekreislauf einen zweiten Verdichter bildet, und wobei der Hochtemperaturregenerator derart ansteuerbar entweder mit dem Ladekreislauf oder dem Entladekreislauf Fluid leitend verbindbar ist, dass der Hochtemperaturregenerator, der Verdichter sowie der Expander entweder ein Teil des Ladekreislaufs oder ein Teil des Entladekreislaufs bilden, und
wobei der Ladekreislauf, der Entladekreislauf und der Hochtemperaturregenerator dasselbe Arbeitsgas aufweisen, sodass das Arbeitsgas sowohl im Ladekreislauf als auch im Entladekreislauf in direkten Kontakt mit dem Speichermaterial des Hochtemperaturregenerators kommt.

Die Aufgabe wird weiter insbesondere gelöst mit Verfahren zur Speicherung von Energie in einer Energiespeichervorrichtung, wobei die Energiespeichervorrichtung einen Hochtemperaturregenerator enthaltend ein festes, insbesondere poröses Speichermaterial umfasst, wobei ein Arbeitsgas in einem Ladekreislauf erwärmt und gefördert wird, indem das Arbeitsgas in einem Vorwärmer und anschliessend in einem Rekuperator erwärmt wird, indem das Arbeitsgas nachfolgend in einem ersten Verdichter, ausgestaltet als eine erste Kolbenmaschine verdichtet und erhitzt wird, und indem das derart erhitzte Arbeitsgas nachfolgend dem Hochtemperaturregenerator zugeführt wird, sodass das Arbeitsgas dem Speichermaterial Wärme zuführt, und indem das Arbeitsgas nachfolgend im Rekuperator gekühlt wird und nachfolgend in einem ersten Expander, ausgestaltet als eine zweite Kolbenmaschine entspannt wird,
wobei der erste Verdichter vom ersten Expander zumindest teilweise angetrieben wird, und wobei dem Hochtemperaturregenerator über einen Entladekreislauf Wärmeenergie entnommen wird,
wobei der Hochtemperaturregenerator umschaltbar entweder ein Teil des Ladekreislaufs oder ein Teil des Entladekreislaufs bildet, indem der Hochtemperaturregenerator Fluid leitend entweder in den Ladekreislauf oder in den Entladekreislauf geschaltet wird, wobei der Ladekreislauf, der Endladekreislauf sowie der Hochtemperaturregenerator von demselben Arbeitsgas durchströmt werden, sodass das Speichermaterial sowohl im Ladekreislauf als auch im Entladekreislauf direkt vom Arbeitsgas umströmt wird.
Die erfindungsgemässe Energiespeichervorrichtung umfasst einen
Hochtemperaturregenerator enthaltend ein festes Speichermaterial, vorzugsweise ein poröses Speichermaterial, sowie ein Arbeitsgas als Wärmeträgermedium, um über das entlang dem Speichermaterial durchströmende Arbeitsgas Wärme zwischen dem Arbeitsgas und dem Speichermaterial auszutauschen.

Bei Wärmetauschern wird unter anderem zwischen einem Rekuperator und einem Regenerator unterschieden. Bei einem Rekuperator werden zwei Fluide in gegenseitig getrennten Räumen geleitet, wobei zwischen den Räumen eine Wärmeübertragung stattfindet. So sind in einem Rekuperator zwei Fluide beispielsweise mittels einer Trennwand vollständig getrennt, wobei über die gemeinsame Trennwand Wärmeenergie zwischen den beiden Fluiden übertragen wird. Ein Regenerator ist ein Wärmetauscher bei dem die Wärme während des Austauschvorgangs in einem Medium zwischengespeichert wird. Bei einem Regenerator wird das Speichermaterial in einer möglichen Ausgestaltung direkt von Arbeitsgas umströmt. Beim Laden des Regenerators wird die vom Arbeitsgas zugeführte Wärmeenergie an das Speichermaterial abgegeben und im Speichermaterial gespeichert. Beim Entladen des Regenerators wird dem Speichermaterial durch das Arbeitsgas Wärmeenergie entzogen, das Speichermaterial abgekühlt, und die vom Arbeitsgas entzogene Wärmeenergie einem nachfolgenden Prozess zugeführt. Beim Regenerator tritt das Arbeitsgas sowohl beim Laden als auch beim Entladen in direkten Kontakt mit dem Speichermaterial.

Die erfindungsgemässe Energiespeichervorrichtung weist den Vorteil auf, dass nur noch ein Energiespeicher, und gegebenenfalls zusätzlich noch ein Niedertemperaturwärmespeicher, vorzugsweise ein Warmwasserspeicher erforderlich ist. Auf den Niedertemperaturwärmespeicher kann auch verzichtet werden, beispielsweise indem die erforderliche Wärme durch ein Kühlen einer Komponente der Energiespeichervorrichtung, beispielsweise des Verdichters, gewonnen wird. Die erfindungsgemässe Energiespeichervorrichtung weist den Vorteil auf, dass die Verdichter und Expander als Kolbenmaschinen ausgestaltet sind. Kolbenmaschinen, das heisst Kolbenverdichter und Kolbenexpander sind zuverlässig und kostengünstig arbeitende Maschinen, sodass die erfindungsgemässe Energiespeichervorrichtung zuverlässig, wartungsarm und kostengünstig betreibbar ist. Die erfindungsgemässe Energiespeichervorrichtung umfasst nebst dem Hochtemperatur-Regenerator zudem einen Ladekreislauf, einen Entladekreislauf, sowie Schaltmittel um zum Laden den Ladekreislauf oder zum Entladen den Entladekreislauf mit dem Hochtemperaturregenerator zu verbinden. Der Ladekreislauf sowie der Entladekreislauf können in einer möglichen Ausführungsform offen ausgestaltet sein. Vorzugsweise sind der Ladekreislauf sowie der Entladekreislauf jedoch als geschlossene Kreisläufe ausgestaltet. Als Speichermaterial im Hochtemperatur-Regenerator ist ein festes Material wie beispielsweise poröse feuerfeste Steine, Sand, Kies, Beton, Graphit oder eine Keramik geeignet, oder eine Kombination dieser Materialien. Zudem müssen im Hochtemperatur-Regenerator Strömungswege vorgesehen sein und/oder das Speichermaterial porös ausgestaltet sein, damit das Arbeitsgas entlang oder durch das Speichermaterial strömen kann. Das Speichermaterial kann auf eine Temperatur von vorzugsweise im Bereich zwischen 600-1000 °C und falls erforderlich auch auf bis zu 1500 °C erhitzt werden. Der Ladekreislauf sowie der Entladekreislauf sind vorteilhafterweise als ein geschlossener Kreislauf ausgestaltet. Diese Ausführungsform weist den Vorteil auf, dass das Arbeitsgas auch einen Überdruck aufweisen kann, was die Leistungsdichte der Kolbenmaschinen bei höherem Druck entsprechend erhöht. In einer vorteilhaften Ausführungsform wird als Arbeitsgas ein Inertgas wie Argon oder Stickstoff verwendet. Als Arbeitsgase sind jedoch auch andere Gase geeignet. Bei einem offenen Ladekreislauf und einem offenen Entladekreislauf kann als Arbeitsgas beispielsweise auch Luft verwendet werden. Die erfindungsgemässe Energiespeichervorrichtung weist den Vorteil auf, dass diese eine hohe Energiedichte aufweist, sodass der Hochtemperaturgenerator relativ kompakt ausgestaltet werden kann. Zudem ist der Hochtemperatur-Regenerator kostengünstig herstellbar, da das Speichermaterial sehr günstig und zudem umweltverträglich ist. Die erfindungsgemässe Energiespeichervorrichtung weist zudem den Vorteil auf, dass der Entladekreislauf je nach Bedarf unterschiedlich ausgestaltet werden kann. Vorteilhafterweise treibt der Entladekreislauf einen Generator oder eine andere mechanische Leistung aufnehmende Einrichtung an um elektrische oder mechanische Energie zu erzeugen. Es ist jedoch auch möglich dem Entladekreislauf an Stelle oder zusätzlich zur elektrischen Energie auch Wärme zu entnehmen, beispielsweise Prozess-, Industrie- oder Heizwärme.

In einer besonders vorteilhaften Ausgestaltung umfasst die Energiespeichervorrichtung einen Elektrogenerator, und in einer bevorzugten Ausgestaltung zudem einen Elektromotor, sodass die erfindungsgemässe Energiespeichervorrichtung mit elektrischer Energie geladen werden kann, und beim Entladen auch wieder elektrische Energie abgibt. Eine derartige Energiespeichervorrichtung wird in Englisch auch als "Electricity Energy Storage System by means of Pumped Heat (ESSPH)" bezeichnet.
Die erfindungsgemässe Energiespeichervorrichtung umfassend einen Elektrogenerator sowie einen Elektromotor ist somit in der Lage elektrische Energie in Wärmeenergie zu wandeln, die Wärmeenergie zu speichern, und die gespeicherte Wärmeenergie wieder in elektrische Energie zu wandeln. Die erfindungsgemässe Energiespeichervorrichtung kann somit auch als "thermische Batterie" bezeichnet werden, welche über einen Ladevorgang aufgeladen werden kann und über einen Entladevorgang entladen werden kann, wobei der Ladevorgang mit Hilfe eines Heissgaswärmepumpenprozesses mit einer Kolbenmaschine erfolgt und der Entladevorgang ebenfalls mit Hilfe der Kolbenmaschine erfolgt. Zum Verdichten und Entspannen werden Kolbenmaschine, insbesondere linear bewegliche Kolbenmaschinen oder Kreuzkopfkolbenmaschinen verwendet.

Die erfindungsgemässe Energiespeichervorrichtung, beziehungsweise die thermische Batterie, kann insofern ähnlich einer Elektrobatterie geladen und entladen werden, als jederzeit auch ein Teilladen oder ein Teilentladen möglich ist. Das der erfindungsgemässen Energiespeichervorrichtung zu Grunde liegende Speicherkonzept erlaubt es durch eine entsprechende Auslegung der Teilkomponenten Leistungen im Bereich von vorzugsweise zwischen 1 kW bis 10 MW und Energiemengen im Bereich zwischen vorzugsweise wenigen kWh bis 50 MWh zu speichern und zeitverzögert wieder abzugeben. In einer besonders vorteilhaften Ausgestaltung sind der Elektrogenerator und der Elektromotor als eine einzige Maschine in Form eines Motorgenerators ausgestaltet. Die erfindungsgemässe Energiespeichervorrichtung ist hervorragend geeignet um elektrische Energie zeitlich zu schieben, zum Beispiel um 12 oder 24 Stunden, beispielsweise um in einem elektrischen Netz tagsüber anfallende Sonnenenergie zu speichern und diese nachts wieder abzugeben. Die erfindungsgemässe Energiespeichervorrichtung ist zudem hervorragend zur Stabilisierung des elektrischen Netzes geeignet, insbesondere zur Frequenzstabilisierung. In einer vorteilhaften Betriebsweise wird die Energiespeichervorrichtung mit konstanter Drehzahl betrieben und ist mit dem elektrischen Netz verbunden.

In einer möglichen Ausgestaltung umfasst die erfindungsgemässe Energiespeichervorrichtung zumindest vier Kolbenmaschinen, wobei zwei Kolbenmaschinen als Kolbenverdichter bzw. als Kolbenkompressoren betrieben werden, und wobei zwei Kolbenmaschinen als Kolbenexpander betrieben werden, wobei sowohl der Ladekreislauf als auch der Entladekreislauf je einen Kolbenverdichter und einen Kolbenexpander umfasst.

In einer besonders vorteilhaften Ausgestaltung umfasst die erfindungsgemässe Energiespeichervorrichtung eine erste und eine zweite Kolbenmaschine, wobei die erste Kolbenmaschine umschaltbar entweder als ein Hochtemperaturverdichter oder als ein Hochtemperturexpander betreibbar ist, und wobei die zweite Kolbenmaschine umschaltbar entweder als ein Niedertemperaturverdichter oder als ein Niedertemperturexpander betreibbar ist. Der Hochtemperaturregenerator und die beiden Kolbenmaschinen sind derart Fluid leiten miteinander verbindbar, dass während dem Laden im Ladekreislauf der Hochtemperaturverdichter und der Niedertemperaturexpander geschaltet sind, und dass während dem Entladen im Entladekreislauf der Niedertemperaturverdichter und der Hochtemperaturexpander geschaltet sind. Diese Ausführungsform weist den Vorteil auf, dass die Energiespeichervorrichtung mit zwei Kolbenmaschinen betreibbar ist, und dass vorzugsweise ausser den zwei Kolbenmaschinen keine weiteren Verdichter und Expander erforderlich sind.

In einer weiteren, besonders vorteilhaften Ausgestaltung ist die erste und die zweite Kolbenmaschine in einer einzigen Kolbenmaschine integriert, indem die einzige Kolbenmaschine als doppelt wirkende Kolbenmaschine ausgestaltet ist, indem diese einen Zylinder umfasst, in welchem ein doppelt wirkender Kolben angeordnet ist, wobei der doppelt wirkende Kolben den Zylinder in einen ersten und einen zweiten Innenraum unterteilt. Diese einzige Kolbenmaschine bildet abhängig vom Schaltzustand entweder den Hochtemperaturverdichter und den Niedertemperaturexpander oder den Hochtemperturexpander und den Niedertemperaturverdichter aus. In einer besonders vorteilhaften Ausgestaltung wird diese einzige Kolbenmaschine von einem Linearantrieb angetrieben, vorzugsweise von einem elektrischen Linearantrieb, und besonders bevorzugt von einem elektrischen Linearantrieb der auch als elektrischer Lineargenerator verwendbar ist, sodass über den Linearantrieb abhängig vom Betriebsmodus der Energiespeichervorrichtung elektrische Leistung bzw. Energie zugeführt oder abgeführt werden kann. Eine derartige Energiespeichervorrichtung ist besonders kostengünstig herstellbar, und ist insbesondere auch zur Speicherung von kleinen Leistungen, beispielsweise im Bereich von 1 kW bis 100 KW, bzw. zur Speicherung von kleinen Energiemengen, beispielsweise im Bereich von 1 kWh bis 500 kWh geeignet.

Nachfolgend wird die Erfindung an Hand von Ausführungsbeispielen im Detail beschrieben.

### Kurze Beschreibung der Zeichnungen

Die zur Erläuterung der Ausführungsbeispiele verwendeten Zeichnungen zeigen:
Fig. 1 ein erstes Ausführungsbeispiel einer Energiespeichervorrichtung umfassend einen Ladekreislauf und einen Entladekreislauf;
Fig. 2 den Ladekreislauf gemäss Figur 1 im Detail;
Fig. 3 den Entladekreislauf gemäss Figur 1 im Detail;
Fig. 4 ein zweites Ausführungsbeispiel einer Energiespeichervorrichtung;
Fig. 5 ein drittes Ausführungsbeispiel einer Energiespeichervorrichtung;
Fig. 6 ein viertes Ausführungsbeispiel einer Energiespeichervorrichtung;
Fig. 7 den Ladekreislauf gemäss Figur 6 im Detail;
Fig. 8 den Entladekreislauf gemäss Figur 6 im Detail;
Fig. 9a einen Niedertemperaturspeicher;
Fig. 9b einen weiteren Niedertemperaturspeicher;
Fig. 10 ein fünftes Ausführungsbeispiel einer Energiespeichervorrichtung;
Fig. 11 ein Ausführungsbeispiel des Ladekreislaufs gemäss Figur 11 im Detail;
Fig. 12 den Entladekreislauf gemäss Figur 11 im Detail;
Fig. 13 schematisch einen Längsschnitt durch eine doppelt wirkende Kolbenmaschine;
Fig. 14 ein sechstes Ausführungsbeispiel einer Energiespeichervorrichtung;
Fig. 15 ein weiteres Ausführungsbeispiel eines Ladekreislaufes im Detail;
Fig. 16 ein weiteres Ausführungsbeispiel eines Entladekreislaufes im Detail.

Grundsätzlich sind in den Zeichnungen gleiche Teile mit gleichen Bezugszeichen versehen.

### Wege zur Ausführung der Erfindung

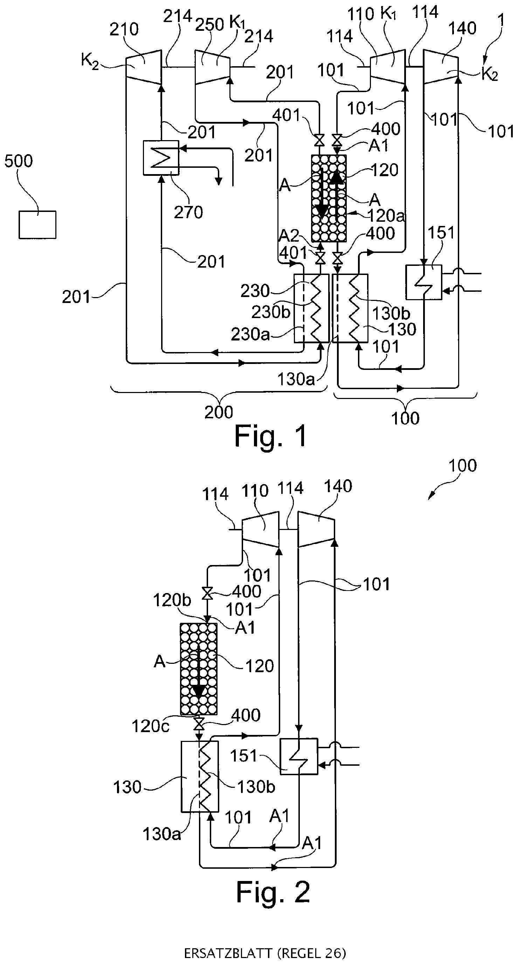

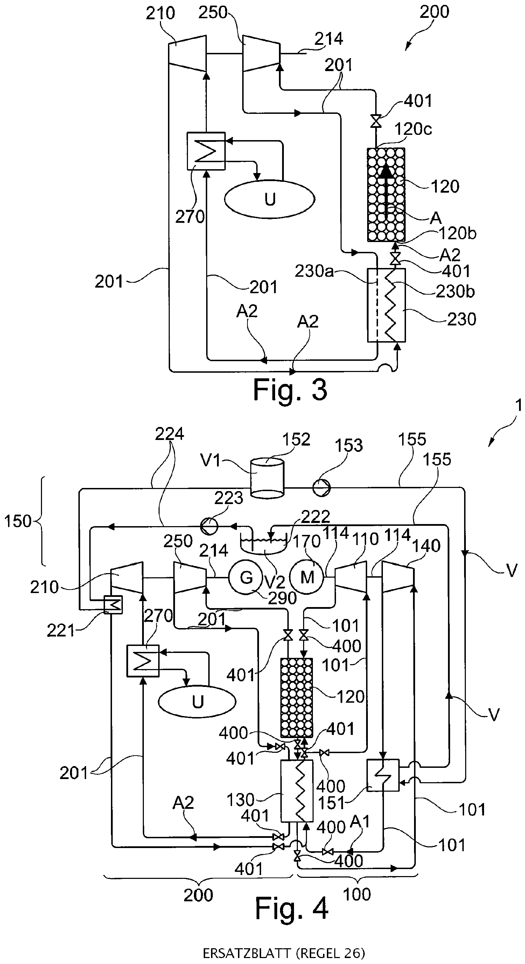

Figur 1 zeigt eine Energiespeichervorrichtung 1 zur Speicherung thermischer Energie, umfassend einen geschlossenen Ladekreislauf 100 mit Leitungen 101, einen geschlossenen Entladekreislauf 200 mit Leitungen 201, einen Hochtemperaturregenerator 120 sowie Schaltmittel 400, 401 wobei die Schaltmittel 400, 401 derart mit den Leitungen 101, 201 verbunden sind, dass der Hochtemperaturregenerator 120 Fluid leitend entweder mit dem Ladekreislauf 100 oder mit dem Entladekreislauf 200 verbunden werden kann, sodass der Hochtemperaturregenerator 120 ein Teil des Ladekreislaufs 100 bzw. ein Teil des Entladekreislaufs 200 bildet. Eine Regelungsvorrichtung 500 ist signalleitend mit den Schaltmitteln 400, 401 und weiteren, nicht im Detail dargestellten Sensoren und Aktuatoren verbunden, um die Energiespeichervorrichtung 1 anzusteuern. Die Figuren 2 und 3 zeigen den in Figur 1 dargestellten Ladekreis 100 bzw. Entladekreis 200 im Detail. Der Hochtemperaturregenerator 120 enthält ein festes Speichermaterial sowie ein Arbeitsgas A als Wärmeträgermedium, um zwischen dem Speichermaterial und dem durchströmenden Arbeitsgas A Wärme auszutauschen. Als festes Speichermaterial für den Hochtemperaturregenerator sind beispielsweise poröse feuerfeste Materialien, Sand, Kies, Gestein, Beton, Graphit oder auch eine Keramik wie Siliziumkarbid geeignet. Der Hochtemperaturregenerator 120 umfasst eine Aussenhülle 120a sowie einen Innenraum, wobei im Innenraum das feste Speichermaterial derart angeordnet und/oder ausgestaltet ist, dass das Speichermaterial zum Wärmeaustausch vom Arbeitsgas A durchströmt oder umströmt werden kann. Der Hochtemperaturregenerator 120 umfasst, wie aus Figur 2 ersichtlich, zudem zumindest eine Eintrittsöffnung 120b sowie zumindest eine Austrittsöffnung 120c um das in den Leitungen 101 bzw. 201 strömende Arbeitsgas A dem Innenraum des Hochtemperaturregenerators zu- bzw. abzuführen, sodass das im Ladekreislauf 100 oder im Entladekreislauf 200 zirkulierende Arbeitsgas A in direkten Kontakt mit dem festen Speichermaterial gelangt. Figur 1 zeigt einen in vertikaler Richtung verlaufenden bzw. angeordneten Hochtemperaturregenerator 120, wobei das Arbeitsgas A vorteilhafterweise beim Laden von oben nach unten strömt und beim Entladen von unten nach oben strömt.

Figur 2 zeigt den in Figur 1 dargestellten geschlossenen Ladekreislauf 100 im Detail. Der geschlossene Ladekreislauf 100 für das Arbeitsgas A umfasst einen ersten Verdichter 110, einen ersten Expander 140, einen ersten Rekuperator 130 mit einem ersten und einem zweiten Wärmetauschkanal 130a, 130b, den Hochtemperaturregenerator 120 sowie einen Vorwärmer 151, wobei der erste Verdichter 110 über eine gemeinsame Welle 114 mit dem ersten Expander 140 gekoppelt ist. Die als Ventile ausgestalteten Schaltmittel 400 sind auf Durchfluss geschaltet und die in Figur 2 nicht dargestellten Schaltmittel 401 sind gesperrt, sodass sich ein geschlossener Ladekreislauf 100 ausbildet, in welchem das Arbeitsgas A in Strömungsrichtung A1 bzw. in Ladeströmungsrichtung A1 strömt. Als Arbeitsgas A wird vorzugsweise Argon oder Stickstoff verwendet. Das Arbeitsgas A wird vorteilhafterweise unter einem Überdruck gehalten, um die Leistungsdichte des Verdichters 110 und der Expander 140 zu erhöhen und den Wärmeübergang in den kalorischen Apparaten zu verbessern. Der Druck liegt vorzugsweise in einem Bereich von 1 bis 20 bar. Ausgehend vom Hochtemperaturregenerator 120 wird das Arbeitsgas A nacheinander folgend zumindest dem ersten Wärmetauschkanal 130a des Rekuperators 130, dem ersten Expander 140, dem Vorwärmer 151, dem zweiten Wärmetauschkanal 130b des Rekuperators 130, dem ersten Verdichter 110 und danach wiederum dem Hochtemperatur-Regenerator 120 zugeführt, unter Ausbildung eines geschlossenen, Fluid leitenden Kreislaufs. Der erste Verdichter 110, der erste Expander 140 sowie der erste Rekuperator 130 eine Wärmepumpe. Der Vorwärmer 151 stellt die Quelle der Energie dar, die dann durch die Wärmepumpe auf ein höheres Temperaturniveau gefördert wird, um danach im Regenerator gespeichert zu werden. Das vom Vorwärmer 151 und dem Rekuperator 130 vorgewärmte Arbeitsgas A wird als Eingangsgas dem ersten Verdichter 110 zugeführt, darin verdichtet, und erfährt dadurch eine Temperatur- und Druckerhöhung. Das verdichtete Arbeitsgas A wird dem Hochtemperaturregenerator 120 zugeführt, darin abgekühlt, nachfolgend im Rekuperator 130 weiter abgekühlt, und anschliessend im ersten Expander 140 entspannt, um anschliessend im Vorwärmer 151 und im Rekuperator 130 wieder vorgewärmt zu werden. Der erste Expander 140 und der Verdichter 110 sind auf derselben Welle 114 angeordnet, sodass der erste Expander 140 das Antreiben des ersten Verdichters 110 unterstützt. Die Welle 114 wird von einer nicht dargestellten Antriebsvorrichtung bzw. einer Kraftmaschine angetrieben, beispielsweise einem Elektromotor, einer Turbine, oder allgemein einer Kraftmaschine.

Um die im Hochtemperaturregenerator 120 gespeicherte Wärmeenergie wieder zu entladen ist ein Entladekreislauf 200 erforderlich. Dieser Entladekreislauf 200 kann auf unterschiedliche Weise ausgestaltet sein, je nach dem Bedarf, für welchen die gespeicherte Wärmeenergie benötigt wird. Figur 3 zeigt den in Figur 1 dargestellten geschlossenen Entladekreislauf 200, welcher mit Kolbenmaschinen ausgestaltet ist, im Detail. Als Arbeitsgas A wird dasselbe Gas wie im Ladekreislauf 100 verwendet, vorzugsweise Argon oder Stickstoff. Der geschlossene Entladekreislauf 200 für das Arbeitsgas A umfasst einen zweiten Verdichter 210, einen zweiten Expander 250, einen zweiten Rekuperator 230 mit einem ersten und einem zweiten Wärmetauschkanal 230a, 230b, den Hochtemperaturregenerator 120 sowie einen ersten Kühler 270, wobei der zweite Verdichter 210 über die Welle 214 mit dem zweiten Expander 250 gekoppelt ist. Die als Ventile ausgestalteten Schaltmittel 401 sind auf Durchfluss geschaltet und die in Figur 3 nicht dargestellten Schaltmittel 400 sind gesperrt, sodass sich ein geschlossener Entladekreislauf 200 ausbildet, in welchem das Arbeitsgas A in Strömungsrichtung A2 bzw. in Entladeströmungsrichtung A2 strömt. Der Entladekreislauf 200 ist derart ausgebildet, dass ausgehend vom Hochtemperaturregenerator 120 nacheinander folgend zumindest der zweite Expander 250, der erster Wärmetauschkanal 230a des zweiten Rekuperators 230, der erste Kühler 270, der zweite Verdichter 210, der zweite Wärmetauschkanal 230b des Rekuperators 230, und danach der Hochtemperatur-Regenerator 120 unter Ausbildung des geschlossenen Kreislaufs Fluid leitend miteinander verbunden sind, wobei das Arbeitsgas A im Entladekreislauf 200 in Strömungsrichtung A2 bzw. in Entladeströmungsrichtung A2 strömt. Wie in Figur 3 dargestellt wird im ersten Kühler 270 vorzugsweise auf Umgebungstemperatur U gekühlt. Wie aus den Figuren 2 und 3 ersichtlich fliesst im Hochtemperaturregenerator 120 die Entladeströmungsrichtung A2 in entgegengesetzter Richtung zur Ladeströmungsrichtung A1. Das aus dem Hochtemperaturregenerator 120 ausströmende Arbeitsgas A wird über den zweiten Expander 250 entspannt und dadurch gekühlt, und wird danach im zweiten Rekuperator 230 und im ersten Kühler 270 weiter gekühlt, bevor das Arbeitsgas A im zweiten Verdichter 210 komprimiert wird und anschliessend im zweiten Rekuperator 230 vorgewärmt wird, um danach wieder in den Hochtemperaturregenerator 120 einzuströmen. Der zweite Verdichter 210 und der zweite Expander 250 sind miteinander gekoppelt, und im dargestellten Ausführungsbeispiel mit einer Welle 214 verbunden, sodass der zweite Expander 250 den zweiten Verdichter 210 antreibt. Der Welle 214 wird von einer nicht dargestellten Anordnung Energie entnommen, wobei beispielsweise ein Generator oder eine Arbeitsmaschine mit der Welle 214 verbunden sein kann.

In einer möglichen Ausgestaltung umfasst die in den Figuren 1 bis 3 dargestellte Energiespeichervorrichtung 1 zwei Kolbenverdichter, welche den ersten und zweiten Verdichter 110, 210 ausbilden, sowie zwei Kolbenexpander, welche den ersten und den zweiten Expander 250 ausbilden. In einer besonders vorteilhaften Ausgestaltung umfasst die Energiespeichervorrichtung 1 wie in Figur 1 dargestellt eine erste Kolbenmaschine K1 und eine zweite Kolbenmaschine K2, wobei der erste Verdichter 110 ein Teil der ersten Kolbenmaschine K1 bildet und der erste Expander 140 ein Teil der zweiten Kolbenmaschine (K2) bildet, wobei die Kolbenmaschinen K1, K2 derart ansteuerbar entweder als Verdichter oder als Expander betreibbar sind, dass die erste Kolbenmaschine K1 auch ein Teil des zweiten Expanders 250 und die zweite Kolbenmaschine K2 ein Teil des zweiten Verdichter 210 ausbildet. Somit genügen zwei Kolbenmaschinen um die in Figur 1 dargestellte Energiespeichervorrichtung 1 zu betreiben.

Figur 4 zeigt eine weitere, vorteilhafte Ausgestaltung einer Energiespeichervorrichtung 1. Im Unterschied zu der in den Figuren 1 bis 3 dargestellten Energiespeichervorrichtung 1 mit zwei separaten Rekuperatoren 130 weist die in Figur 4 dargestellte Energiespeichervorrichtung 1 einen einzigen, gemeinsamen Rekuperator 130 auf. Das Arbeitsgas A wird mit Hilfe von Schaltmitteln 400, 401 wie Ventilen derart schaltbar geleitet, dass ein Ladekreislauf 100 beziehungsweise ein Entladekreislauf 200 entsteht, ähnlich dem in Figur 2 bzw. 3 dargestellten Ladekreislauf 100 bez. Entladekreislauf 200, mit Ausnahme, dass nur ein einziger, gemeinsamer Rekuperator 130 vorhanden ist.

In einer weiteren, vorteilhaften Ausgestaltung umfasst die Energiespeichervorrichtung 1 nebst dem Ladekreislauf 100 und dem Entladekreislauf 200 zudem noch ein Vorwärmesystem 150 für ein zirkulierendes Vorwärmfluid V. Das Vorwärmesystem 150 umfasst insbesondere einen ersten Fluidspeicher 152, in welchem ein erwärmtes Vorwärmfluid V1 gespeichert wird, einen zweiten Fluidspeicher 222, in welchem ein abgekühltes Vorwärmfluid V2 gespeichert wird, sowie Fluidleitungen 155, 224 und gegebenenfalls Fördermittel 153, 223 um das Vorwärmfluid V im Vorwärmesystem 150 zu zirkulieren und insbesondere dem Vorwärmer 151 und dem Kühler 221 zuzuführen. Im dargestellten Ausführungsbeispiel wird das Vorwärmfluid V, ausgehend vom ersten Fluidspeicher 152 das erwärmte Vorwärmfluid V dem Vorwärmer 151 zugeführt, und das danach abgekühlte Vorwärmfluid V dem zweiten Fluidspeicher 222 zugeführt. Das abgekühlte Vorwärmfluid V des zweiten Fluidspeichers 222 wird einem Nachkühler 221 zugeführt, und das danach erwärmte Vorwärmfluid V dem ersten Fluidspeicher 152 zugeführt. Als Vorwärmfluid V wird vorzugsweise Wasser verwendet, da Wasser bezüglich Wärme eine hohe Speicherdichte aufweist. Der zweite Fluidspeicher 222 könnte als ein Flüssigkeitsbehälter ausgestaltet sein, sodass das Vorwärmesystem 150 einen geschlossenen Kreislauf ausbildet. Der zweite Fluidspeicher 222 könnte auch offen ausgestaltet sein, wobei an Stelle eines Behälters auch ein Gewässer, beispielsweise ein See, geeignet wäre zur Aufnahme des abgekühlten Vorwärmfluides V beziehungsweise zur Bereitstellung von Kühlfluid V.

In einer vorteilhaften Ausgestaltung wird die Energiespeichervorrichtung 1 zur Speicherung von elektrischer Energie und zur zeitlich versetzten Abgabe von elektrischer Energie verwendet. Figur 4 zeigt eine derartige Speichervorrichtung für elektrische Energie umfassend die Energiespeichervorrichtung 1 sowie umfassend einen Elektromotor 170 und einen Generator 290. In einer besonders vorteilhaften Ausgestaltung sind der Elektromotor 170 und der Generator 290 zu einer einzigen Maschine zusammengefasst unter Ausbildung eines sogenannten Motorgenerators. Die in Figur 4 dargestellte Energiespeichervorrichtung 1 ist daher besonders günstig herstellbar, weil nur ein einziger Motorgenerator 170/290, ein einziger Hochtemperaturregenerator 120 und ein einziger Rekuperator 130 erforderlich ist.

Zur Funktionsweise der in Figur 4 dargestellten, vorteilhaften Energiespeichervorrichtung 1 werden nachfolgend noch einige Details erläutert. Der erste Verdichter 110, der erste Expander 140, der erste Rekuperator 130 bilden im Ladekreislauf 100 eine Wärmepumpe. Das vorgeheizte Arbeitsgas A wird dem ersten Verdichter 110 zugeführt und darin auf den maximalen Druck beziehungsweise auf die maximale Temperatur im Ladekreislauf 100 gebracht. Das Arbeitsgas A wird danach durch den Hochtemperaturregenerator 120 geleitet, dabei abgekühlt und nachfolgend im Rekuperator 130 nochmals abgekühlt. Das Arbeitsgas A wird danach im ersten Expander 140 entspannt auf den tiefsten Druck im Ladekreislauf 100, wobei die dadurch im ersten Expander 140 freigesetzte Energie zum teilweisen Antrieb des ersten Verdichters 110 genutzt wird. Das Arbeitsgas A fliest danach durch den Vorwärmer 151 und wird dabei vorgewärmt. Der Vorwärmer 151 ist mit dem Vorwärmesystem 150 verbunden und bezieht die Wärmeenergie aus dem ersten Fluidspeicher 152 für das warme Vorwärmfluid, in der dargestellten Ausführungsform als warmes Wasser.

Der Entladekreislauf 200 umfasst einen zweiten Verdichter 210, ausgestaltet als ein Kolbenkompressor, und umfasst den Nachkühler 221, den Rekuperator 130, den Hochtemperaturregenerator 120, den zweiten Expander 250 und den ersten Kühler 270, der zur Umgebungstemperatur U kühlt. Der Nachkühler 221 ist über Leitungen 224 mit dem Vorwärmesystem 150 verbunden, wobei kühles Fluid dem Speicher 222 entnommen wird, über das Fördermittel 223 dem Nachkühler 221 zugeführt wird, und wobei das erwärmte Fluid dem Speicher 152 zugeführt wird.

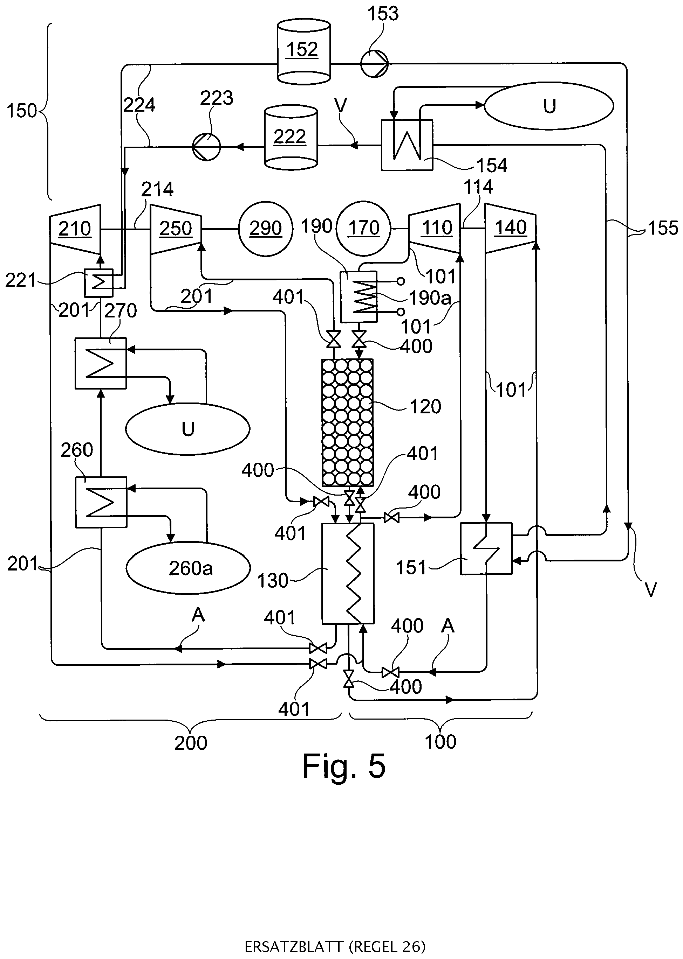

Figur 5 zeigt ein weiteres Ausführungsbeispiel einer Energiespeichervorrichtung 1, die wiederum einen Ladekreislauf 100, einen Entladekreislauf 200 sowie einen Vorwärmekreislauf 150 umfasst. Die Energiespeichervorrichtung 1 gemäss Figur 5 ist ähnlich ausgestaltet wie die Energiespeichervorrichtung 1 gemäss Figur 4, unterscheidet sich jedoch zumindest bezüglich der nachfolgenden Aspekte:
- Der Vorwärmekreislauf 150 ist als geschlossener Kreislauf ausgestaltet, umfassend einen geschlossenen Behälter 222, wobei als Fluid im geschlossenen Kreislauf vorzugsweise Wasser verwendet wird. Zudem ist im Vorwärmekreislauf 150 ein Wärmetauscher 221 angeordnet, zudem ist ein Wärmetauscher 154 angeordnet, welcher gegenüber der Umgebung U Wärme austauscht. Der Wärmetauscher 154 kann alternativ auch zwischen dem Kaltwasserspeicher 222 und der Fördereinrichtung 223 angeordnet sein. Der Wärmetauscher 154 kann alternativ auch im Kaltwasserspeicher 222 angeordnet sein, um direkt zwischen dem Kaltwasserspeicher 222 und der Umgebung U oder einem weiteren Medium Wärme auszutauschen. Beispielsweise könnte der Kaltwasserspeicher 222 nachts durch den Wärmetauscher 154 gekühlt werden.

Der Ladekreislauf 100 umfasst in einer vorteilhaften Ausgestaltung eine Zusatzheizung 190, welche zwischen dem ersten Verdichter 110 und dem Hochtemperaturregenerator 120 angeordnet ist. Die Zusatzheizung 190 dient dazu das den ersten Verdichter 110 verlassende, heisse Arbeitsgas A nochmals nachzuerhitzen, beispielsweise von 750 °C auf 1500°C, um dadurch die im Hochtemperaturregenerator 120 gespeicherte Energie zu erhöhen. Die Zusatzheizung 190 könnte beispielsweise eine Elektroheizung 190a enthalten um das durchfliessende Arbeitsgas A zu erhitzen. Abhängig von der durch die Zusatzheizung 190 bewirkten Temperaturerhöhung des Arbeitsgases A kann die im Hochtemperaturregenerator 120 gespeicherte Wärmeenergie um einen beträchtlichen Faktor, erhöht werden, beispielsweise um einen Faktor 2. - Der Entladekreislauf 200 umfasst einen zusätzlichen Kühler 260, über welchen dem Entladekreislauf 200 Wärme für einen Wärmeprozess 260a entnommen werden kann. Der Wärmeprozess 260a könnte beispielsweise ein lokaler Wärmeverbund zur Beheizung von Häusern sein.

In Figur 5 sind zudem noch Schaltmittel 400, 401 bzw. Ventile dargestellt, welche erforderlich sind um bei der dargestellten Energiespeichervorrichtung 1 zwischen dem Ladevorgang und dem Entladevorgang beziehungsweise zwischen Ladekreislauf 100 und Entladekreislauf 200 umzuschalten.

Die in Figur 5 dargestellte Energiespeichervorrichtung 1 weist unter anderem den Vorteil auf, dass, falls erwünscht, Wärmeenergie auch direkt abgeführt werden kann, und Wärmeenergie zudem auch an unterschiedlichen Stellen und zu unterschiedlich hohen Temperaturen abgeführt werden kann. Wie in Figur 5 dargestellt kann der zweite Fluidspeicher 222 beispielsweise auch als geschlossener Behälter ausgestaltet sein, wobei im Vorwärmekreislauf 150 ein zusätzlicher Wärmetauscher 154 angeordnet ist, welcher Wärme mit der Umgebung austauscht.

Bei den in den Figuren 1 bis 5 dargestellten Ausführungsbeispielen wird der Ladekreislauf 100 und der Entladekreislauf 200 vorteilhafterweise druckaufgeladen betrieben. Der erste Verdichter 110 und der zweite Verdichter 210 sind als Kolbenverdichter ausgestaltet.
Der erste Verdichter 110 und der zweite Verdichter 210 sind vorzugsweise ohne eine Regeleinrichtung ausgerüstet. Der erste und zweite Verdichter 110, 210 könnte jedoch auch mit einer Durchfluss-Regeleinrichtung ausgerüstet werden. Vorzugsweise besteht beim ersten Verdichter oder zweiten Verdichter 110, 210 die Durchfluss-Regeleinrichtung aus einem Abhebegreifer.

Vorzugsweise ist der erste Verdichter 110 ungekühlt. Optional kann der erste Verdichter 110 auch mit einer Kühleinrichtung ausgestattet sein.

Der Hochtemperaturregenerator 120 ist vorteilhafterweise ein druckfester, temperaturbeständiger, wärmeisolierter Behälter. Der Hochtemperaturregenerator 120 ist vorteilhafterweise mit einem porösen, temperaturfesten Wärmespeichermaterial 121 bestückt, wobei in den freien Räumen des Hochtemperaturregenerators 120 das Arbeitsgas A strömt. Vorteilhafterweise ist der Hochtemperaturregenerators 120 vertikal angeordnet und wird beim Laden vorzugsweise von oben nach unten durchströmt und beim Entladen von unten nach oben.

Das Fluid im Vorwärmekreislauf 150 ist vorzugsweise Wasser. Optional könnten auch andere Fluide wie beispielsweise eine Mischung aus Wasser und (Mono-) Ethylenglycol verwendet werden. Der Vorwärmekreislauf 150 wird vorzugsweise drucklos betrieben. Optional kann der Vorwärmekreislauf 150 druckbeaufschlagt betrieben werden. Für diesen Fall ist der Vorwärmekreislauf 150 druckfest ausgeführt.

Vorzugsweise ist der Antrieb 170 des Ladekreislaufs 100 als Elektromotor ausgestaltet. Eine Vielzahl von Kraftmaschinen sind als Antrieb 170 geeignet. Optional ist der Elektromotor mit einem Frequenzumrichter ausgestattet. Optional ist der Antrieb 170 des Ladekreislaufs 100 eine Dampfturbine. Optional ist der Antrieb 170 des Ladekreislaufs 100 eine Gasturbine. Optional ist der Antrieb 170 des Ladekreislaufs ein Verbrennungsmotor. Vorzugsweise werden die drehenden Komponenten des Ladekreislaufs 100 bei konstanter Drehzahl betrieben. Optional werden die drehenden Komponenten des Ladekreislaufs 100 drehzahl-variabel betrieben.

Vorzugsweise ist der Verbraucher 290 des Entladekreislaufs 200 als Generator ausgestaltet. Optional ist der Generator mit einem Frequenzumrichter ausgestattet. Optional ist der Verbraucher 290 des Entladekreislaufs 200 ein Verdichter. Optional ist der Verbraucher 290 des Entladekreislaufs 200 eine Pumpe. Optional ist der Verbraucher 290 des Entladekreislaufs 200 eine Schiffsschraube. Vorzugsweise werden die drehenden Komponenten des Entladekreislaufs 200 bei konstanter Drehzahl betrieben. Optional werden die drehenden Komponenten des Entladekreislaufs 200 drehzahl-variabel betrieben.

In einem weiteren möglichen Ausführungsbeispiel könnte als Arbeitsgas auch Luft verwendet werden, wobei dann sicherzustellen ist, dass das Speichermaterial S im Hochtemperaturregenerator 120 aus einem nicht brennbaren Material besteht.

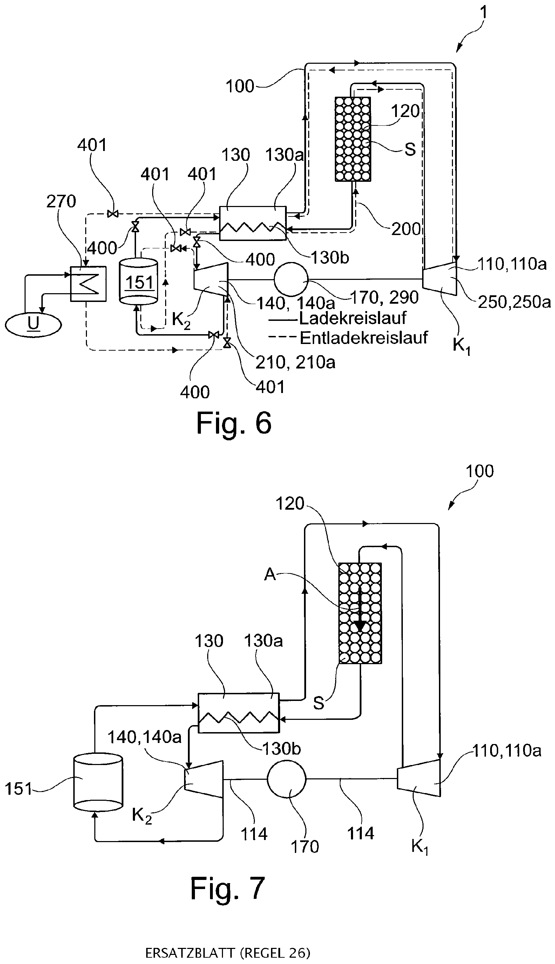

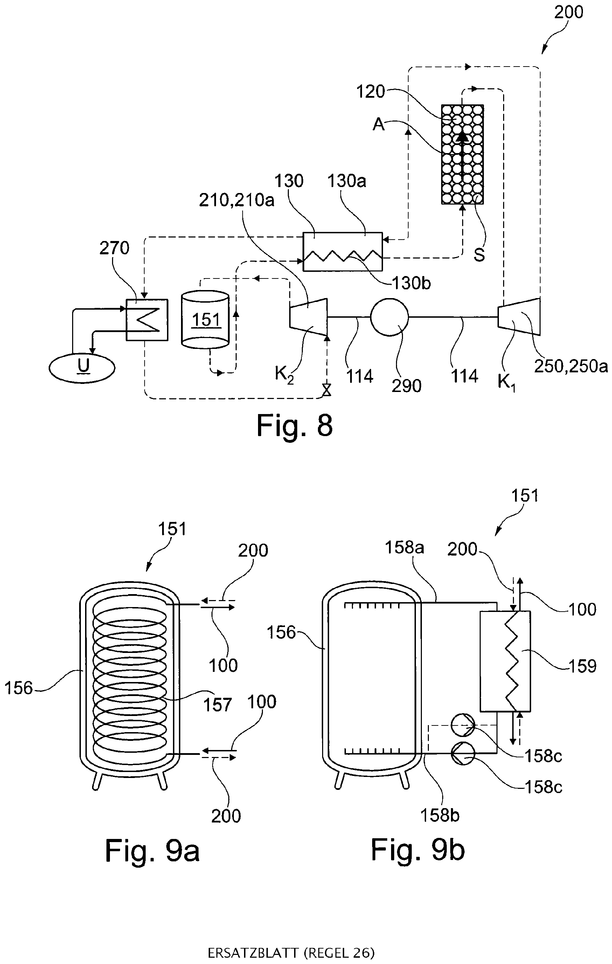

Figur 6 zeigt ein viertes Ausführungsbeispiel einer Energiespeichervorrichtung 1. Figur 7 zeigt den geschlossenen Ladekreislauf 100 gemäss Figur 6 im Detail und Figur 8 den geschlossenen Entladekreislauf 200 gemäss Figur 6 im Detail. Die Energiespeichervorrichtung 1 zur Speicherung von Energie umfasst
- einen Hochtemperaturregenerator 120 enthaltend ein festes, insbesondere poröses Speichermaterial S,
- ein Arbeitsgas A als Wärmeträgermedium, um zwischen dem Speichermaterial S und dem durchströmenden Arbeitsgas A Wärme auszutauschen, und
- einen Ladekreislauf 100 sowie einen Entladekreislauf 200 für das Arbeitsgas A,
wobei der Ladekreislauf 100 derart ausgebildet ist, dass ausgehend von einem Vorwärmer 151, der als Niedertemperaturwärmespeicher ausgestaltet ist, zumindest ein erster Wärmetauschkanal 130a eines Rekuperators 130, ein erster Verdichter 110, der Hochtemperaturregenerator 120, ein zweiter Wärmetauschkanal 130b des Rekuperators 130, und danach ein erster Expander 140 unter Ausbildung eines geschlossenen Kreislaufs Fluid leitend miteinander verbunden sind. Der erste Verdichter 110 ist mit dem ersten Expander 140 gekoppelt, vorzugsweise über eine gemeinsame Welle 114. Vorteilhafterweise ist die gemeinsame Welle 114 zudem mit einem Elektromotor 170 beziehungsweise einem Elektrogenerator 290 verbunden. Der erste Verdichter 110 ist Teil einer ersten Kolbenmaschine K1 und der erste Expander 140 ist Teil einer zweiten Kolbenmaschine K2. Figur 8 zeigt den geschlossenen Entladekreislauf 200, umfassend einen zweiten Verdichter 210 sowie einen zweite Expander 250. Die Kolbenmaschinen K1, K2 sind derart ansteuerbar, dass diese entweder als Verdichter oder als Expander betreibbar sind, dass der erste Verdichter 110 des Ladekreislaufs 100 im Entladekreislauf 200 einen zweiten Expander 250 bildet, und dass der erste Expander 140 des Ladekreislaufs 100 im Entladekreislauf 200 einen zweiten Verdichter 210 bildet. Der Hochtemperaturregenerator 120 ist mit Hilfe der nur in Figur 6 dargestellten Schaltmittel 400, 401 derart ansteuerbar, dass dieser entweder mit dem Ladekreislauf 100 oder dem Entladekreislauf 200 Fluid leitend verbindbar ist, dass der Hochtemperaturregenerator 120, der Rekuperator 130, der Verdichter sowie der Expander entweder ein Teil des Ladekreislaufs 100 oder ein Teil des Entladekreislaufs 200 bilden. Der Ladekreislauf 100, der Entladekreislauf 200 und der Hochtemperaturregenerator 120 weisen dasselbe Arbeitsgas A auf, sodass das Arbeitsgas A sowohl im Ladekreislauf 100 als auch im Entladekreislauf 200 in direkten Kontakt mit dem Speichermaterial des Hochtemperaturregenerators 120 kommt.

Wie in Figur 6 dargestellt ist die erste Kolbenmaschine K1 umschaltbar entweder als ein Hochtemperaturverdichter 110a oder als ein Hochtemperturexpander 250a betreibbar ist. Die zweite Kolbenmaschine K2 ist umschaltbar entweder als ein Niedertemperaturverdichter 210a oder als ein Niedertemperturexpander 140a betreibbar. Im Ladekreis 100 ist der erste Verdichter 110 als Hochtemperaturverdichter 110a ausgestaltet, und der erste Expander 140 ist als Niedertemperaturexpander 140a ausgestaltet. Im Entladekreislauf 200 ist der zweite Verdichter 210 als Niedertemperaturverdichter 210a ausgestaltet, und der zweite Expander 250 als Hochtemperaturexpander 250a ausgestaltet ist. Somit genügen zwei Kolbenmaschinen zum Betrieb der in Figur 6 dargestellten Energiespeichervorrichtung. Natürlich können auch zusätzliche Kolbenmaschinen verwendet werden, beispielsweise indem zur Leistungssteigerung Kolbenmaschinen parallel betrieben werden, indem beispielsweise zwei erste Kolbenmaschinen K1 und zwei zweite Kolbenmaschinen K2 parallel geschaltet betrieben werden. Die parallel geschalteten Kolbenmaschinen werden vorzugsweise identisch betrieben. Vorteilhafterweise ist, wie in den Figuren 6 bis 8 dargestellt, die erste Kolbenmaschine K1 dem Hochtemperaturregenerator 120 abhängig von der Strömungsrichtung des Arbeitsgases A unmittelbar vorgelagert beziehungsweise unmittelbar nachgelagert, sodass die erste Kolbenmaschine K1 auch als Heissgasmaschine bezeichnet werden kann, das heisst, das geförderte Arbeitsgas A weist bei der ersten Kolbenmaschine K1 eine hohe Temperatur auf, weshalb der erste Verdichter 110 bzw. der zweite Expander 250 der ersten Kolbenmaschine K1 auch als Hochtemperaturverdichter 110a bzw. als Hochtemperaturexpander 250a bezeichnet werden. Bei der zweiten Kolbenmaschine K2 weist das geförderte Arbeitsgas A eine relativ tiefe Temperatur auf, zum Beispiel Umgebungstemperatur, weshalb die zweite Kolbenmaschine K2 auch als Kaltgasmaschine bezeichnet wird, weshalb der zweite Verdichter 210 bzw. der erste Expander 140 der zweiten Kolbenmaschine K2 auch als Niedertemperaturverdichter 210a bzw. als Niedertemperturexpander 140a bezeichnet werden.

Figur 9a zeigt ein Ausführungsbeispiel eines Vorwärmers 151, ausgestaltet als ein Niedertemperaturspeicher umfassend einen Wassertank 156 gefüllt mit Wasser und einer im Wasser verlaufenden Wärmetauschleitung 157. Der Vorwärmer 151 ist mit Hilfe von Schaltmitteln, wie diese beispielsweise in Figur 6 dargestellt sind, wahlweise mit dem Ladekreislauf 100 oder dem Entladekreislauf 200 verbindbar. Figur 9b zeigt ein weiteres Ausführungsbeispiel eines Vorwärmers 151, ausgestaltet als ein Niedertemperaturspeicher umfassend einen Wassertank 156 gefüllt mit Wasser, sowie Zu- und Ableitungen 158a, 158b, die über Pumpen 158c, mit einem Wärmeübertrager 159 verbunden sind. Der Wärmeübertrager 159 ist mit Hilfe von Schaltmitteln, wie diese beispielsweise in Figur 6 dargestellt sind, wahlweise mit dem Ladekreislauf 100 oder dem Entladekreislauf 200 verbindbar.

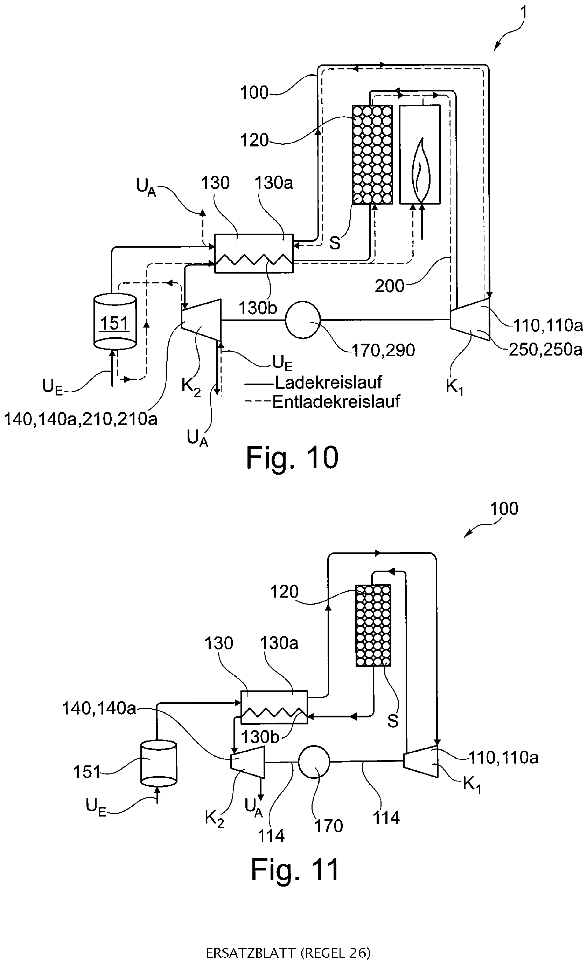

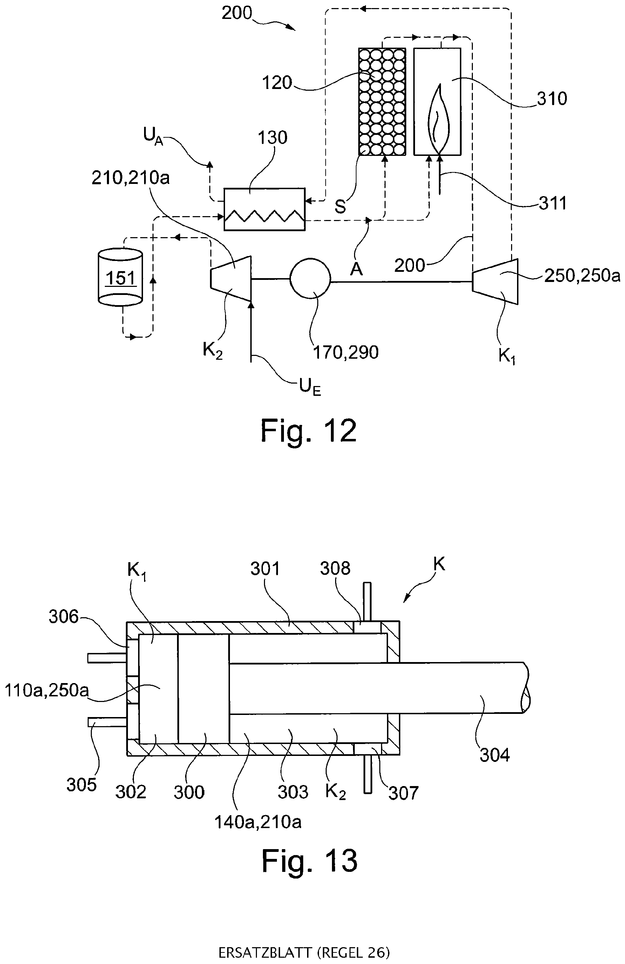

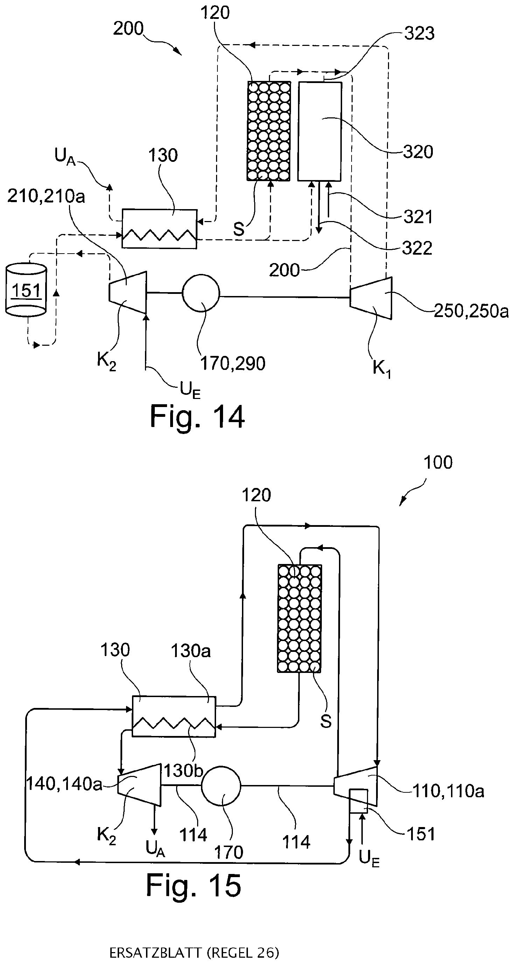

Figur 10 zeigt ein fünftes Ausführungsbeispiel einer Energiespeichervorrichtung 1, die einen offenen Ladekreislauf 100 und einen offenen Entladekreislauf 200 aufweist. Figur 11 zeigt den offenen Ladekreislauf 100. Im Unterschied zu dem in Figur 7 dargestellten geschlossenen Ladekreislauf weist der in Figur 11 dargestellte offene Ladekreislauf einen Eingang U_{E} aus der Umgebung und einen Ausgang U_{A} an die Umgebung auf, sodass dem Vorwärmer 151 vorzugsweise Umgebungsluft U_{E} zugeführt wird, und die Luft nach dem Durchströmen des Ladekreislaufs 100 nach der ersten Expander 140 wieder als Fluidstrom U_{A} an die Umgebung entlassen wird. Alternativ kann der Vorwärmer 151 auch aus einer anderen Wärmequelle Wärme beziehen, indem dieser beispielsweise, wie in Figur 15 dargestellt, im Hochtemperaturverdichter 110a angeordnet ist, der aufgrund hoher Temperaturen gekühlt ausgeführt werden muss, sodass der Vorwärmer 151 gleichzeitig als Kühler wirkt. In diesem Fall wird die Vorwärmung somit mittels Kühlung des Hochtemperaturverdichters sichergestellt. Dies trifft auch auf die geschlossene Variante aus Figur 6 zu. Im Ladekreislauf 100 gemäss Figur 7 könnte der Vorwärmer 151, wie in Figur 15 dargestellt, als Kühler des Hochtemperaturverdichters 110a ausgestaltet sein, sodass der Ausgang des geschlossenen Kreislaufs nach dem ersten Expander 140 dem sich im Hochtemperaturverdichter 110a befindlichen Vorwärmer 151 zugeführt wäre, und der Vorwärmer 151 anschliessend mit dem Rekuperator 130 verbunden ist. Figur 12 zeigt ein Ausführungsbeispiel eines offenen Entladekreislaufs 200, der einen Hochtemperaturregenerator 120 und eine parallel geschaltete Brennkammer 310 umfasst. Der Brennkammer 310 kann ansteuerbar ein Brennstoff 311 zugeführt werden. Die Umgebungsluft U_{E} wird dem Verdichter 210 zugeführt, und wird nach dem Rekuperator 130 ansteuerbar entweder dem Hochtemperaturregenerator 120 und/oder der Brennkammer 310 zugeführt. Diese Energiespeichervorrichtung 1 weist den Vorteil auf, dass mit derselben Vorrichtung auch ein Brennstoff verbrannt werden kann, um daraus Energie, insbesondere elektrische Energie zu erzeugen. Als Brennstoff sind eine Vielzahl von Brennstoffen geeignet, beispielsweise Wasserstoff, Kohlenwasserstoffe wie Erdgas, Methan oder Rohöl, oder auch Brennstoffe, die bei der Abfallverwertung anfallen, wie zum Beispiel Biogas. Die erfindungsgemässe Energiespeichervorrichtung ist somit auch in der Lage Brennstoffe zu nutzen, oder aus Brennstoffen elektrische Energie zu erzeugen. Das die Brennkammer 310 verlassende Gas ist eine Mischung aus Umgebungsluft und Verbrennungsgasen. Figur 10 zeigt eine Kombination der in Figur 11 und 12 dargestellten Kreisläufe.

Figur 13 zeigt ein Ausführungsbeispiel einer doppelt wirkenden Kolbenmaschine K, bei welcher die erste und die zweite Kolbenmaschine K1, K2 zu einer einzigen Kolbenmaschine K zusammengefasst sind. Die einzige Kolbenmaschine K umfasst einen doppelt wirkenden Kolben 300, welcher in einem Zylinder 301 einen ersten und einen zweiten Innenraum 302,303 ausbildet, sodass der erste Innenraum 302 Teil des Hochtemperaturverdichters 110a und der zweite Innenraum 303 Teil des Niedertemperaturexpanders 140a ausbildet, oder umgekehrt, dass der erste Innenraum 302 Teil des Hochtemperaturexpanders 250a und der zweite Innenraum 303 Teil des Niedertemperaturverdichters 210a ausbildet. Es sind zudem Einlassventile 305, 307 und Auslassventile 306, 308 vorgesehen, um einen Fluidaustausch mit dem erste Innenraum 302 bzw. dem zweiten Innenraum 303 und dem Ladekreislauf 100 bzw. dem Entladekreislauf 200 zu ermöglichen. Bei der Verwendung von Kolbenmaschinen mit Ventilen würden die beispielsweise in den Figuren 1 und 5 dargestellten, externen Schaltmittel 400, 401 überflüssig. Eine in deren Verlaufsrichtung linear bewegliche Kolbenstange 304 ist mit dem Kolben 300 verbunden. Die Kolbenstange 304 ist mit einer Kraftmaschine sowie mit einer Arbeitsmaschine verbunden. In einer besonders vorteilhaften Ausgestaltung ist die Kraftmaschine und die Arbeitsmaschine als elektrischer Linearmotor bzw. als Lineargenerator ausgestaltet, sodass die doppelt wirkende Kolbenmaschine K mit dem Linearmotor über eine lineare Bewegung antreibbar ist, und die doppelt wirkende Kolbenmaschine K über den Lineargenerator elektrische Leistung erzeugt. Vorteilhafterweise weist der Hochtemperaturverdichter 110a bzw. der Hochtemperaturexpander 250a, wie in Figur 13 dargestellt, ein grösseres Volumen aufweist als der Niedertemperaturverdichter 210a bzw. der Niedertemperaturexpander 140a, insbesondere weil das heisse Gas ein grösseres Volumen einnimmt. Vorteilhafterweise wird die doppelt wirkenden Kolbenmaschine K ölfrei betrieben oder zumindest beim Kolben 300 eine ölfreie Dichtung verwendet, um eine Verschmutzung des Ladekreislaufs 100 und des Entladekreislaufs 200 mit Öl zu vermeiden. In einer vorteilhaften Ausgestaltung sind die Einlassventile 305, 307 und/oder die Auslassventile 306, 308 angesteuert, insbesondere um die Menge an gefördertem Arbeitsgas A anzusteuern und für die Umschaltung der Einrichtung vom Ladeprozess zum Entladeprozess.

Figur 14 zeigt einen Entladekreislauf 200 eines sechsten Ausführungsbeispiels einer Energiespeichervorrichtung 1. Im Unterschied zu dem in Figur 12 dargestellten Entladekreislauf 200 ist bei dem in Figur 14 dargestellten Entladekreislauf 200 die in Figur 12 dargestellte Brennkammer 310 durch eine nur schematisch dargestellte Brennstoffzelle 320 beziehungsweise ein schematisch dargestelltes Brennstoffzellensystem umfassend die Brennstoffzelle 320 ersetzt. Als Brennstoffzelle 320 ist insbesondere eine SOFC-Brennstoffzelle (Solid Oxide Fuell Cell) geeignet. Der Brennstoffzelle 320 wird auf an sich bekannte Weise einerseits zumindest ein Teil der sich im Endladekreislauf 200 befindlichen und erwärmten Umgebungsluft U_{E} zugeführt, und andererseits wird ein Brennstoff 322, beispielsweise Wasserstoff, Methan oder Biogas, zugeführt. Die Abgase 323 der Brennstoffzelle 320 werden dem Entladekreislauf 200 zugeführt. Zudem wird die durch die Brennstoffzelle 320 erzeugte elektrische Energie 322 abgeführt.

Der in Figur 14 dargestellte Entladekreislauf 200 wird vorteilhafterweise mit dem in Figur 11 dargestellten Ladekreislauf 100 zu einer Energiespeichervorrichtung 1 kombiniert, ähnlich zu der in Figur 10 dargestellten Energiespeichervorrichtung 1, mit Ausnahme, dass die Brennkammer 310 durch die Brennstoffzelle 320 beziehungsweise ein Brennstoffzellensystem umfassend die Brennstoffzelle 320 ersetzt ist. Eine solche Anordnung weist einen höheren Gesamtwirkungsgrad auf als die Energiespeichervorrichtung 1 gemäss Figur 10 umfassend die Brennkammer 310. Eine Energiespeichervorrichtung 1 umfassend den Entladekreislauf 200 gemäss Figur 14 kann bei der Verstromung von Wasserstoff, Methan oder anderen geeigneten Brennstoffen einen elektrischen Wirkungsgrad von beispielsweise mehr als 70 % aufweisen. Es sind unterschiedliche Brennstoffzellentypen geeignet, wobei eine SOFC-Brennstoffzelle besonders geeignet ist, da diese Betriebstemperaturen von vorteilhafterweise etwa 1000 °C aufweist.

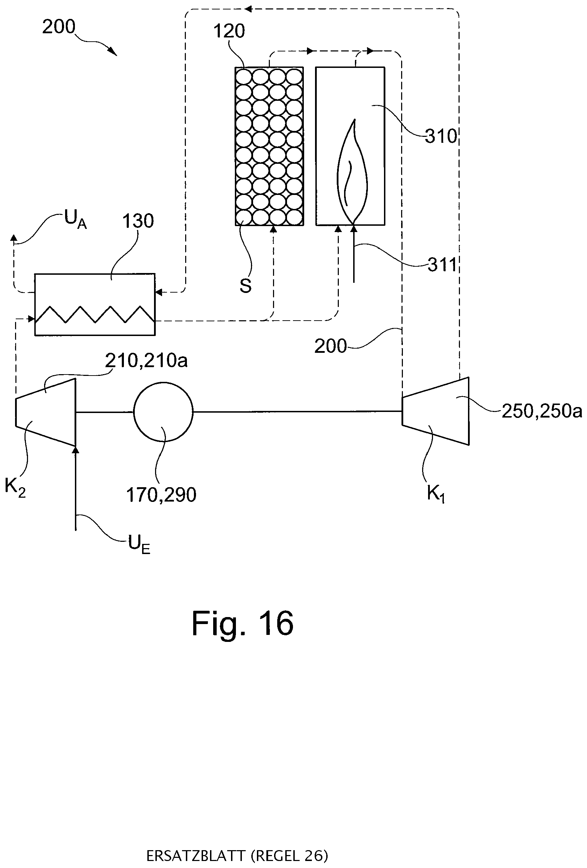

Figur 16 zeigt einen weiteren Entladekreislauf 200, der keinen Vorwärmer 151 umfasst, ansonsten jedoch identisch zu dem in Figur 12 dargestellten Endladekreislauf 200 ausgestaltet ist. Der in Figur 15 dargestellte Ladekreislauf 100 und der in Figur 16 dargestellte Entladekreislauf 200 wird vorzugsweise zu einer Energiespeichervorrichtung 1 kombiniert, wie diese in Figur 10 dargestellt ist, mit Ausnahme, dass der Vorwärmer 151 im ersten Verdichter 110 angeordnet ist und diese kühlt, sodass der Endladekreislauf 200, wie in Figur 16 dargestellt, an sich keinen Vorwärmer 151 benötigt.

Die in den Figuren 6 bis 8 dargestellte, geschlossene Energiespeichervorrichtung 1 könnte auch derart modifiziert werden, dass der Vorwärmer 151, wie in Figur 15 dargestellt, vom Verdichter 110 Wärme bezieht, indem dieser gekühlt wird, sodass in Figur 7 der Vorwärmer 151 beim Verdichter 110 angeordnet wäre. Bei einer solchen Ausgestaltung könnte in Entladekreislauf 200 gemäss Figur 8 auf den Vorwärmer 151 verzichtet werden, sodass der zweite Verdichter 210 direkt mit dem Rekuperator 130 verbunden wäre.

## Patentansprüche

1. Energiespeichervorrichtung (1) zur Speicherung von Energie, umfassend:
- einen Hochtemperaturregenerator (120) enthaltend ein festes, insbesondere poröses Speichermaterial (S),
- ein Arbeitsgas (A) als Wärmeträgermedium, um zwischen dem Speichermaterial (S) und dem durchströmenden Arbeitsgas (A) Wärme auszutauschen, und
- einen Ladekreislauf (100) sowie einen Entladekreislauf (200) für das Arbeitsgas (A), wobei der Ladekreislauf (100) derart ausgebildet ist, dass ausgehend von einem Vorwärmer (151) zumindest ein erster Wärmetauschkanal eines Rekuperators (130), ein erster Verdichter (110), der Hochtemperaturregenerator (120), ein zweiter Wärmetauschkanal des Rekuperators (130), und danach ein erster Expander (140) unter Ausbildung eines Kreislaufs Fluid leitend miteinander verbunden sind, und wobei der erste Verdichter (110) mit dem ersten Expander (140) gekoppelt ist, und wobei der erste Verdichter (110) Teil einer ersten Kolbenmaschine (K1) bildet und der erste Expander (140) Teil einer zweiten Kolbenmaschine (K2) bildet, wobei die Kolbenmaschinen (K1, K2) derart ansteuerbar entweder als Verdichter oder als Expander betreibbar sind, dass der erste Verdichter (110) des Ladekreislaufs (100) im Entladekreislauf (200) einen zweite Expander (250) bildet, und dass der erste Expander (140) des Ladekreislaufs (100) im Entladekreislauf (200) einen zweiten Verdichter (210) bildet, und
wobei der Hochtemperaturregenerator (120) derart ansteuerbar entweder mit dem Ladekreislauf (100) oder dem Entladekreislauf (200) Fluid leitend verbindbar ist, dass der Hochtemperaturregenerator (120), der Verdichter sowie der Expander entweder ein Teil des Ladekreislaufs (100) oder ein Teil des Entladekreislaufs (200) bilden, und wobei der Ladekreislauf (100), der Entladekreislauf (200) und der Hochtemperaturregenerator (120) dasselbe Arbeitsgas (A) aufweisen, sodass das Arbeitsgas (A) sowohl im Ladekreislauf (100) als auch im Entladekreislauf (200) in direkten Kontakt mit dem Speichermaterial des Hochtemperaturregenerators (120) kommt.

2. Energiespeichervorrichtung nach Anspruch 1, **dadurch gekennzeichnet, dass** der Ladekreislauf (100) als geschlossener Ladekreislauf ausgestaltet ist, und dass der Entladekreislauf (200) als geschlossener Entladekreislauf ausgestaltet ist.

3. Energiespeichervorrichtung nach Anspruch 2, **dadurch gekennzeichnet, dass** der Entladekreislauf (200) den zweiten Verdichter (210), den zweite Expander (250), den Rekuperator (130), den Hochtemperaturregenerator (120), den Vorwärmer (151) sowie einen Kühler (270) umfasst, wobei der Entladekreislauf (200) derart ausgebildet ist, dass ausgehend vom Hochtemperaturregenerator (120) zumindest der zweite Expander (250), der erste Wärmetauschkanal des Rekuperators (130), der Kühler (270), der zweite Verdichter (210), der Vorwärmer (151), der zweite Wärmetauschkanal des Rekuperators (130), und danach der Hochtemperaturregenerator (120) unter Ausbildung des geschlossenen Kreislaufs Fluid leitend miteinander verbunden sind.

4. Energiespeichervorrichtung nach einem der Ansprüche 1 bis 3, **dadurch gekennzeichnet, dass** die erste Kolbenmaschine (K1) umschaltbar entweder als ein Hochtemperaturverdichter (110a) oder als ein Hochtemperturexpander (250a) betreibbar ist, dass die zweite Kolbenmaschine (K2) umschaltbar entweder als ein Niedertemperaturverdichter (210a) oder als ein Niedertemperturexpander (140a) betreibbar ist, dass im Ladekreis (100) der erste Verdichter (110) als Hochtemperaturverdichter (110a) und der erste Expander (140) als Niedertemperaturexpander (140a) ausgestaltet ist, und dass im Entladekreislauf (200) der zweite Verdichter (210) als Niedertemperaturverdichter (210a) und der zweite Expander (250) als Hochtemperaturexpander (250a) ausgestaltet ist.

5. Energiespeichervorrichtung nach Anspruch 4, **dadurch gekennzeichnet, dass** die erste Kolbenmaschine (K1) dem Hochtemperaturregenerator (120) abhängig von der Strömungsrichtung des Arbeitsgases (A) unmittelbar vorgelagert beziehungsweise unmittelbar nachgelagert ist.

6. Energiespeichervorrichtung nach einem der vorhergehenden Ansprüche, **dadurch gekennzeichnet, dass** die erste Kolbenmaschine (K1) und die zweite Kolbenmaschine (K2) mit einer Kraftmaschine und/oder mit einer Arbeitsmaschine gekoppelt sind, wobei die Kraftmaschine vorzugsweise als ein Elektromotor und die Arbeitsmaschine vorzugsweise als ein Elektrogenerator ausgestaltet sind.

7. Energiespeichervorrichtung nach einem der vorhergehenden Ansprüche, **dadurch gekennzeichnet, dass** das Speichermaterial (S) des Hochtemperaturregenerators (120) zumindest eines der nachfolgenden Materialien umfasst: poröses Material, Sand, Kies, Gestein, Beton, Graphit, Keramik wie Siliziumkarbid.

8. Energiespeichervorrichtung nach einem der vorhergehenden Ansprüche, **dadurch gekennzeichnet, dass** die erste und die zweite Kolbenmaschine (K1, K2) durch zumindest zwei separate Kolbenmaschinen (K1, K2) ausgebildet sind, oder durch eine einzige Kolbenmaschine umfassend zumindest zwei Kolben.

9. Energiespeichervorrichtung nach einem der Ansprüche 1 bis 7, **dadurch gekennzeichnet, dass** die erste und die zweite Kolbenmaschine (K1, K2) durch eine einzige Kolbenmaschine (K) ausgebildet ist, wobei die einzige Kolbenmaschine (K) einen doppelt wirkenden Kolben (300) umfasst, welcher in einem Zylinder (301) einen ersten und einen zweiten Innenraum (302,303) ausbildet, sodass der erste Innenraum (302) Teil des Hochtemperaturverdichters (110a) und der zweite Innenraum (303) Teil des Niedertemperaturexpanders (140a) ausbildet, oder umgekehrt, dass der erste Innenraum (302) Teil des Hochtemperaturexpanders (250a) und der zweite Innenraum (303) Teil des Niedertemperaturverdichters (210a) ausbildet.

10. Energiespeichervorrichtung nach einem der vorhergehenden Ansprüche, mit Ausnahme der Ansprüche 2 oder 3, **dadurch gekennzeichnet, dass** im Entladekreislauf (200) parallel zum Hochtemperaturregenerator (120) eine Brennkammer (310) geschaltet ist, sodass das Arbeitsgas (A) im Entladekreislauf (200) alternativ oder zusätzlich durch einen der Brennkammer (310) zugeführten Brennstoff heizbar ist.

11. Energiespeichervorrichtung nach einem der vorhergehenden Ansprüche, mit Ausnahme der Ansprüche 2 oder 3, **dadurch gekennzeichnet, dass** im Entladekreislauf (200) parallel zum Hochtemperaturregenerator (120) eine Brennstoffzelle (320) geschaltet ist, wobei ein Teil des Arbeitsgases (A) der Brennstoffzelle (320) zugeführt ist, und wobei die Abgase (323) der Brennstoffzelle (320) dem Entladekreislauf (200) zugeführt sind.

12. Verfahren zur Speicherung von Energie in einer Energiespeichervorrichtung (1) umfassend einen Hochtemperaturregenerator (120) enthaltend ein festes, insbesondere poröses Speichermaterial (S), wobei ein Arbeitsgas (A) in einem Ladekreislauf (100) erwärmt und gefördert wird, indem das Arbeitsgas (A) in einem Vorwärmer (151) und anschliessend in einem Rekuperator (130) erwärmt wird, indem das Arbeitsgas (A) nachfolgend in einem ersten Verdichter (110), ausgestaltet als eine erste Kolbenmaschine (K1) verdichtet und erhitzt wird, und indem das derart erhitzte Arbeitsgas (A) nachfolgend dem Hochtemperaturregenerator (120) zugeführt wird, sodass das Arbeitsgas (A) dem Speichermaterial (S) Wärme zuführt, und indem das Arbeitsgas (A) nachfolgend im Rekuperator (130) gekühlt wird und nachfolgend in einem ersten Expander (140), ausgestaltet als eine zweite Kolbenmaschine (K2) entspannt wird,
wobei der erste Verdichter (110) vom ersten Expander (140) zumindest teilweise angetrieben wird,
und wobei dem Hochtemperaturregenerator (120) über einen Entladekreislauf (200) Wärmeenergie entnommen wird,
wobei der Hochtemperaturregenerator (120) umschaltbar entweder ein Teil des Ladekreislaufs (100) oder ein Teil des Entladekreislaufs (200) bildet, indem der Hochtemperaturregenerator (120) Fluid leitend entweder in den Ladekreislauf (100) oder in den Entladekreislauf (200) geschaltet wird, wobei der Ladekreislauf (100), der Endladekreislauf (200) sowie der Hochtemperaturregenerator (120) von demselben Arbeitsgas (A) durchströmt werden, sodass das Speichermaterial sowohl im Ladekreislauf (100) als auch im Entladekreislauf (200) direkt vom Arbeitsgas (A) umströmt wird.

13. Verfahren nach Anspruch 12, **dadurch gekennzeichnet, dass** der Ladekreislauf (100) und der Entladekreislauf (200) als geschlossene Kreisläufe betrieben werden.

14. Verfahren nach Anspruch 12 oder 13, **dadurch gekennzeichnet, dass** die erste Kolbenmaschine (K1) umschaltbar entweder als ein Hochtemperaturverdichter (110a) oder als Hochtemperturexpander (250a) betrieben wird, dass die zweite Kolbenmaschine (K2) umschaltbar entweder als Niedertemperaturverdichter (210a) oder als Niedertemperturexpander (140a) betrieben wird, und dass der Hochtemperaturregenerator (120) sowie die Kolbenmaschinen (K1, K2) derart ansteuerbar mit den Ladekreislauf (100) beziehungsweise dem Entladekreis (200) verbunden werden, dass der Ladekreislauf (100) den Hochtemperaturverdichter (110a) und den Niedertemperaturexpander (140a) umfasst, und dass der Entladekreislauf (200) den Niedertemperaturverdichter (210a) und den Hochtemperaturexpander (250a) umfasst.

15. Verwendung einer Energiespeichervorrichtung nach einem der Ansprüche 1 bis 11 zur Speicherung von elektrischer Energie und zur zeitlich versetzten Abgabe von elektrischer Energie.

## Claims

1. Energy storage device (1) for storing energy, comprising:
- a high-temperature regenerator (120) containing a solid, in particular porous, storage material (S),
- a working gas (A) as heat transfer medium to transfer heat between the storage material (S) and the flowing working gas (A), and
- a charging circuit (100) and a discharging circuit (200) for the working gas (A),
the charging circuit (100) being designed such that, starting from a preheater (151), at least a first heat exchange channel of a recuperator (130), a first compressor (110), the high-temperature regenerator (120), a second heat exchange channel of the recuperator (130), and then a first expander (140) are conductively connected to one another to form a circuit so as to conduct fluid, and wherein the first compressor (110) is coupled to the first expander (140), and wherein
the first compressor (110) forms part of a first piston machine (K1) and the first expander (140) forms part of a second piston machine (K2), wherein the piston machines (K1, K2) are controllably operable either as a compressor or as an expander such that the first compressor (110) of the charging circuit (100) forms a second expander (250) in the discharging circuit (200), and in that the first expander (140) of the charging circuit (100) forms a second compressor (210) in the discharging circuit (200), and wherein the high-temperature regenerator (120) can be operatively connected to either the charging circuit (100) or the discharging circuit (200) such that the high-temperature regenerator (120), the compressor and the expander form either a part of the charging circuit (100) or a part of the discharging circuit (200), and wherein the charging circuit (100), the discharging circuit (200) and the high temperature regenerator (120) have the same working gas (A) so that the working gas (A) comes into direct contact with the storage material of the high temperature regenerator (120) both in the charging circuit (100) and in the discharging circuit (200).

2. Energy storage device according to claim 1, **characterized in that** the charging circuit (100) is designed as a closed charging circuit, and **in that** the discharging circuit (200) is designed as a closed discharging circuit.

3. Energy storage device according to claim 2, **characterized in that** the discharging circuit (200) comprises the second compressor (210), the second expander (250), the recuperator (130), the high-temperature regenerator (120), the preheater (151) and a cooler (270), wherein the discharging circuit (200) being formed in such a way, **in that** at least the second expander (250), the first heat exchange channel of the recuperator (130), the cooler (270), the second compressor (210), the preheater (151), the second heat exchange channel of the recuperator (130), and then the high-temperature regenerator (120) are conductively connected to one another starting from the high-temperature regenerator (120) to form the closed circuit.

4. Energy storage device according to one of claims 1 to 3, **characterized in that** the first piston machine (K1) can be operated switchably either as a high-temperature compressor (110a) or as a high-temperature expander (250a), **in that** the second piston machine (K2) can be operated switchably either as a low-temperature compressor (210a) or as a low-temperature expander (140a), **in that**, in the charging circuit (100), the first compressor (110) is configured as a high-temperature compressor (110a) and the first expander (140) is configured as a low-temperature expander (140a), and **in that**, in the discharging circuit (200), the second compressor (210) is configured as a low-temperature compressor (210a) and the second expander (250) is configured as a high-temperature expander (250a).

5. Energy storage device according to claim 4, **characterized in that** the first piston machine (K1) is directly upstream or directly downstream of the high-temperature regenerator (120) depending on the flow direction of the working gas (A).

6. Energy storage device according to one of the preceding claims, **characterized in that** the first piston machine (K1) and the second piston machine (K2) are coupled to a motor machine and/or to a working machine, the motor machine preferably being designed as an electric motor and the working machine preferably as an electric generator.

7. Energy storage device according to one of the preceding claims, **characterized in that** the storage material (S) of the high-temperature regenerator (120) comprises at least one of the following materials: porous material, sand, gravel, rock, concrete, graphite, ceramics such as silicon carbide.

8. Energy storage device according to one of the preceding claims, **characterized in that** the first and second piston machines (K1, K2) are formed by at least two separate piston machines (K1, K2) or by a single piston machine comprising at least two pistons.

9. Energy storage device according to one of claims 1 to 7, **characterized in that** the first and second piston machines (K1, K2) are formed by a single piston machine (K), the single piston machine (K) comprising a double-acting piston (300) which has in a cylinder (301) a first and a second interior space (302),303) such that the first interior (302) forms part of the high temperature compressor (110a) and the second interior (303) forms part of the low temperature expander (140a), or vice versa, that the first interior (302) forms part of the high temperature expander (250a) and the second interior (303) forms part of the low temperature compressor (210a).

10. Energy storage device according to one of the preceding claims, with the exception of claims 2 or 3, **characterized in that** a combustion chamber (310) is connected in the discharging circuit (200) in parallel with the high-temperature regenerator (120), so that the working gas (A) in the discharging circuit (200) can be heated alternatively or additionally by a fuel supplied to the combustion chamber (310).

11. Energy storage device according to one of the preceding claims, with the exception of claims 2 or 3, **characterized in that** a fuel cell (320) is connected in the discharging circuit (200) in parallel with the high-temperature regenerator (120), wherein part of the working gas (A) being fed to the fuel cell (320), and wherein the exhaust gases (323) from the fuel cell (320) being fed to the discharging circuit (200).

12. Method for storing energy in an energy storage device (1) comprising a high-temperature regenerator (120) containing a solid, in particular porous storage material (S), wherein a working gas (A) is heated and conveyed in a charging circuit (100) by heating the working gas (A) in a preheater (151) and subsequently in a recuperator (130), in that the working gas (A) is subsequently compressed and heated in a first compressor (110) configured as a first piston machine (K1), and in that the working gas (A) thus heated is subsequently supplied to the high-temperature regenerator (120) so that the working gas (A) supplies heat to the storage material (S), and in that the working gas (A) is subsequently cooled in the recuperator (130) and is subsequently expanded in a first expander (140), which is designed as a second piston machine (K2),
wherein the first compressor (110) is at least partially driven by the first expander (140),
and wherein thermal energy is taken from the high-temperature regenerator (120) via a discharging circuit (200),
wherein the high-temperature regenerator (120) switchably forms either a part of the charging circuit (100) or a part of the discharging circuit (200), in that the high-temperature regenerator (120) is switched fluid conductively either into the charging circuit (100) or into the discharging circuit (200), wherein the charging circuit (100), the discharging circuit (200) and the high-temperature regenerator (120) being flowed through by the same working gas (A), so that the working gas (A) flows directly around the storage material both in the charging circuit (100) and in the discharging circuit (200).

13. Method according to claim 12, **characterized in that** the charging circuit (100) and the discharging circuit (200) are operated as closed circuits.

14. Method according to claim 12 or 13, **characterized in that** the first piston machine (K1) is operated switchably either as a high-temperature compressor (110a) or as a high-temperature expander (250a), **in that** the second piston machine (K2) is operated switchably either as a low-temperature compressor (210a) or as a low-temperature expander (140a), and **in that** the high-temperature regenerator (120) and the piston machines (K1, K2) are controllably connected to the charging circuit (100) and the discharging circuit (200), respectively, in such a way that the charging circuit (100) comprises the high-temperature compressor (110a) and the low-temperature expander (140a), and **in that** the discharging circuit (200) comprises the low-temperature compressor (210a) and the high-temperature expander (250a).

15. Use of an energy storage device according to any one of claims 1 to 11 for storing electrical energy and for the time-shifted release of electrical energy.

## Revendications

1. Dispositif accumulateur d'énergie (1) destiné à stocker de l'énergie, comprenant :
- un générateur de haute température (120) contenant un matériau d'accumulation (S) solide, notamment poreux,
- un gaz de travail (A) en tant que fluide caloporteur, pour échanger de la chaleur entre le matériau d'accumulation (S) et le gaz de travail (A) qui s'écoule, et
- un circuit de charge (100) ainsi qu'un circuit de décharge (200) pour le gaz de travail (A), le circuit de charge (100) étant configuré de telle sorte qu'à partir d'un préchauffeur (151), au moins un premier canal d'échange de chaleur d'un récupérateur (130), un premier compresseur (110), le générateur de haute température (120), un deuxième canal d'échange de chaleur du récupérateur (130), et ensuite un premier détendeur (140) sont reliés entre eux en conduction fluidique en formant un circuit, et le premier compresseur (110) étant couplé au premier détendeur (140), et le premier compresseur (110) formant une partie d'une première machine à piston (K1) et le premier détendeur (140) formant une partie d'une deuxième machine à piston (K2), les machines à piston (K1, K2) pouvant être commandées de manière à fonctionner soit en tant que compresseur, soit en tant que détendeur, de sorte que le premier compresseur (110) du circuit de charge (100) forme un deuxième détendeur (250) dans le circuit de décharge (200) et que le premier détendeur (140) du circuit de charge (100) forme un deuxième compresseur (210) dans le circuit de décharge (200), et
le générateur de haute température (120) pouvant être commandé pour pouvoir être relié en conduction fluidique soit au circuit de charge (100), soit au circuit de décharge (200), de sorte que le générateur de haute température (120), le compresseur ainsi que le détendeur forment soit une partie du circuit de charge (100), soit une partie du circuit de décharge (200), et
le circuit de charge (100), le circuit de décharge (200) et le générateur de haute température (120) possédant le même gaz de travail (A), de sorte que le gaz de travail (A) entre en contact direct avec le matériau d'accumulation du générateur de haute température (120) à la fois dans le circuit de charge (100) et dans le circuit de décharge (200).

2. Dispositif accumulateur d'énergie selon la revendication 1, **caractérisé en ce que** le circuit de charge (100) est réalisé sous la forme d'un circuit de charge fermé et **en ce que** le circuit de décharge (200) est réalisé sous la forme d'un circuit de décharge fermé.

3. Dispositif accumulateur d'énergie selon la revendication 2, **caractérisé en ce que** le circuit de décharge (200) comporte le deuxième compresseur (210), le deuxième détendeur (250), le récupérateur (130), le générateur de haute température (120), le préchauffeur (151) ainsi qu'un radiateur (270), le circuit de décharge (200) étant configuré de telle sorte qu'à partir du générateur de haute température (120), au moins le deuxième détendeur (250), le premier canal d'échange de chaleur du récupérateur (130), le radiateur (270), le deuxième compresseur (210), le préchauffeur (151), le deuxième canal d'échange de chaleur du récupérateur (130), et ensuite le générateur de haute température (120) sont reliés entre eux en conduction fluidique en formant un circuit fermé.

4. Dispositif accumulateur d'énergie selon l'une des revendications 1 à 3, **caractérisé en ce que** la première machine à piston (K1) est permutable pour fonctionner soit en tant qu'un compresseur à haute température (110a), soit en tant que détendeur à haute température (250a), **en ce que** la deuxième machine à piston (K2) est permutable pour fonctionner soit en tant qu'un compresseur à basse température (210a), soit en tant que détendeur à basse température (140a), **en ce que** dans le circuit de charge (100), le premier compresseur (110) est configuré en tant que compresseur à haute température (110a) et le premier détendeur (140) est configuré en tant que détendeur à basse température (140a), et **en ce que** dans le circuit de décharge (200), le deuxième compresseur (210) est configuré en tant que compresseur à basse température (210a) et le deuxième détendeur (250) est configuré en tant que détendeur à haute température (250a).

5. Dispositif accumulateur d'énergie selon la revendication 4, **caractérisé en ce que** la première machine à piston (K1), suivant le sens d'écoulement du gaz de travail (A), est montée directement en amont ou directement en aval du générateur de haute température (120).

6. Dispositif accumulateur d'énergie selon l'une des revendications précédentes, **caractérisé en ce que** la première machine à piston (K1) et la deuxième machine à piston (K2) sont couplées à une machine motrice et/ou à une machine de travail, la machine motrice étant de préférence réalisée sous la forme d'un moteur électrique et la machine de travail étant de préférence réalisée sous la forme d'un générateur électrique.

7. Dispositif accumulateur d'énergie selon l'une des revendications précédentes, **caractérisé en ce que** le matériau d'accumulation (S) du générateur de haute température (120) comprend au moins l'un des matériaux suivants : matériau poreux, sable, gravier, rocaille, béton, graphite, céramique comme du carbure de silicium.

8. Dispositif accumulateur d'énergie selon l'une des revendications précédentes, **caractérisé en ce que** la première et la deuxième machine à piston (K1, K2) sont formées par au moins deux machines à piston (K1, K2) séparées ou par une machine à piston unique comprenant au moins deux pistons.

9. Dispositif accumulateur d'énergie selon l'une des revendications 1 à 7, **caractérisé en ce que** la première et la deuxième machine à piston (K1, K2) sont formées par une machine à piston unique (K), la machine à piston unique (K) comportant un piston (300) à double action qui forme un premier et un deuxième espace intérieur (302, 303) dans un cylindre (301), de sorte que le premier espace intérieur (302) forme une partie du compresseur à haute température (110a) et le deuxième espace intérieur (303) forme une partie du détendeur à basse température (140a), ou inversement, de sorte que le premier espace intérieur (302) forme une partie du détendeur à haute température (250a) et le deuxième espace intérieur (303) forme une partie du compresseur à basse température (210a).

10. Dispositif accumulateur d'énergie selon l'une des revendications précédentes, à l'exception des revendications 2 ou 3, **caractérisé en ce que** dans le circuit de décharge (200), une chambre de combustion (310) est branchée en parallèle avec le générateur de haute température (120), de sorte que le gaz de travail (A) dans le circuit de décharge (200) peut être chauffé en alternative ou en complément par un combustible acheminé à la chambre de combustion (310).

11. Dispositif accumulateur d'énergie selon l'une des revendications précédentes, à l'exception des revendications 2 ou 3, **caractérisé en ce que** dans le circuit de décharge (200), une pile à combustible (320) est branchée en parallèle avec le générateur de haute température (120), une partie du gaz de travail (A) étant acheminé à la pile à combustible (320) et les gaz d'échappement (323) de la pile à combustible (320) étant acheminés au circuit de décharge (200).

12. Procédé de stockage d'énergie dans un dispositif accumulateur d'énergie (1), comprenant un générateur de haute température (120) qui contient un matériau d'accumulation (S) solide, notamment poreux, un gaz de travail (A) étant chauffé et transporté dans un circuit de charge (100) en chauffant le gaz de travail (A) dans un préchauffeur (151) et ensuite dans un récupérateur (130), en compressant et réchauffant ensuite le gaz de travail (A) dans un premier compresseur (110), réalisé sous la forme d'une première machine à piston (K1), et en acheminant ensuite le gaz de travail (A) ainsi réchauffé au générateur de haute température (120), de sorte que le gaz de travail (A) achemine de la chaleur au matériau d'accumulation (S), et en refroidissant ensuite le gaz de travail (A) dans le récupérateur (130) et en le détendant ensuite dans un premier détendeur (140), réalisé sous la forme d'une deuxième machine à piston (K2),
le premier compresseur (110) étant au moins partiellement entraîné par le premier détendeur (140),
de l'énergie thermique étant soutirée du générateur de haute température (120) par le biais d'un circuit de décharge (200),
le générateur de haute température (120) permutable formant soit une partie du circuit de charge (100), soit une partie du circuit de décharge (200) en connectant le générateur de haute température (120) en conduction fluidique soit dans le circuit de charge (100), soit dans le circuit de décharge (200), le circuit de charge (100), le circuit de décharge (200) et le générateur de haute température (120) étant traversés par le même gaz de travail (A), de sorte que le matériau d'accumulation est exposé directement à l'écoulement de gaz de travail (A) à la fois dans le circuit de charge (100) et dans le circuit de décharge (200).

13. Procédé selon la revendication 12, **caractérisé en ce que** le circuit de charge (100) et le circuit de décharge (200) fonctionnent en tant que circuits fermés.

14. Procédé selon la revendication 12 ou 13, **caractérisé en ce que** la première machine à piston (K1) est permutable pour fonctionner soit en tant qu'un compresseur à haute température (110a), soit en tant que détendeur à haute température (250a), **en ce que** la deuxième machine à piston (K2) est permutable pour fonctionner soit en tant qu'un compresseur à basse température (210a), soit en tant que détendeur à basse température (140a), et **en ce que** le générateur de haute température (120) ainsi que les machines à piston (K1, K2) peuvent être commandés pour être reliés au circuit de charge (100) ou au circuit de décharge (200) de telle sorte que le circuit de charge (100) comprend le compresseur à haute température (110a) et le détendeur à basse température (140a), et **en ce que** le circuit de décharge (200) comprend le compresseur à basse température (210a) et le détendeur à haute température (250a).

15. Utilisation d'un dispositif accumulateur d'énergie selon l'une des revendications 1 à 11 pour stocker de l'énergie électrique et pour délivrer de l'énergie électrique de manière décalée dans le temps.
